# EUROPÄISCHE PATENTSCHRIFT

(11) **EP 3 794 266 B1**
(45) Veröffentlichungstag und Bekanntmachung des Hinweises auf die Patenterteilung: **13.12.2023**
(21) Anmeldenummer: 18730711.1
(22) Anmeldetag: 06.06.2018
(51) Int. Cl.: F16L 37/373

(54) **FLUIDKUPPLUNG**
FLUID COUPLING
ACCOUPLEMENT HYDRAULIQUE

(43) Veröffentlichungstag der Anmeldung: 24.03.2021
(73) Patentinhaber: Stäubli Hamburg GmbH, 22848 Norderstedt (DE)
(72) Erfinder: HAMKENS, Hauke Peter, 25870 Oldenswort (DE); SYLLA, Jan-Oliver, 25832 Tönning (DE); SCHWARZ, Eugen, 21033 Hamburg (DE)
(74) Vertreter: Stork Bamberger Patentanwälte PartmbB
(86) Internationale Anmeldenummer: PCT/EP2018/064921
(87) Internationale Veröffentlichungsnummer: WO 2019/233578

(56) Entgegenhaltungen:
- EP-A1- 0 489 368
- WO-A1-2010/125442
- DE-U1- 20 314 197
- US-A- 4 438 779

## Beschreibung

Die Erfindung bezieht sich auf eine Kupplungshälfte einer Fluidkupplung, wobei die Kupplungshälfte, die ein Kupplungsgehäuse mit Kuppelseite und Gehäuseachse aufweist, ein selbstständiges Kupplungsteil zum Herstellen einer Fluidkupplung mit einem gleichen, durch die entsprechende Kupplungshälfte gebildeten Kupplungsteil ist und wobei die Kupplungshälfte ein Rotationsventil mit einem an dem Kupplungsgehäuse drehbar gelagerten Rotationskörper aufweist, den ein Fluiddurchgang durchquert und dessen Drehstellung zum Öffnen und Schließen des Fluiddurchgangs und damit des Rotationsventils steuerbar ist. Das Kupplungsgehäuse ist insbesondere durch einen kreiszylindrischen Grundkörper mit einem entsprechend zylindrischen Hohlraum gebildet, der einen Strömungsweg ausbildet, in dem sich der Rotationskörper befindet.

Die Erfindung betrifft auch eine Fluidkupplung umfassend zwei an ihren Kuppelseiten lösbar verbundene, jeweils ein Kupplungsgehäuse aufweisende, mit einem Rotationsventil ausgestattete, längs einer Kupplungsachse ausgerichtete Kupplungshälften nach einem oder mehreren der Ansprüche 1 bis 8, die derart einander entsprechend gleich ausgebildet sind, dass jedes Rotationsventil einen um eine Ventilachse, die quer zur Kupplungsachse gerichtet ist, drehbar an dem Kupplungsgehäuse gelagerten Rotationskörper und einen diesen durchquerenden Fluiddurchgang aufweist, der in Abhängigkeit von steuerbaren Drehpositionen des Rotationskörpers um die Ventilachse das Rotationsventil schließt und öffnet, dass an jeder Kupplungshälfte eine Antriebseinrichtung angeordnet ist, die jeweils einem der Rotationskörper zum Steuern seiner Drehpositionen zugeordnet ist, dass jede Kupplungshälfte mit einem Kupplungsmittel ausgestattet ist, das die Kupplungshälften verbindet, wobei die Verbindung durch um die Kupplungsachse relative Drehverstellung der Kupplungshälften zum Entkuppeln lösbar und umgekehrt zum Kuppeln herstellbar ist, und dass die Kupplungshälften Sicherungsmittel aufweisen, die die relative Drehverstellung zum Sichern der Verbindung der Kupplungshälften bei wenigstens einem geöffneten Rotationsventil sperren und die das Schließen der beiden Rotationsventile zum Trennen und entsprechend zum Verbinden der Kupplungshälften sichern, wobeidie Antriebseinrichtung, die jeweils an der einen Kupplungshälfte angeordnet ist, eine Antriebswelle aufweist, die jeweils einer Ventilwelle des Rotationskörpers des Rotationsventils der anderen Kupplungshälfte zugeordnet ist, wobei jeweils eine Arretierverbindung eingerichtet ist, die in dem Zustand der miteinander verbundenen Kupplungshälften die jeweilige Antriebswelle an der einen Kupplungshälfte mit der jeweiligen Ventilwelle an der anderen Kupplungshälfte derart drehfest und lösbar verbindet, dass dadurch die Drehposition dieses Rotationskörpers steuerbar ist und die relative Drehverstellung der Kupplungshälften um die Kupplungsachse mit Ausnahme der Freigabe der relativen Drehverstellung bei geschlossenen Rotationsventilen gesperrt ist.

Üblicherweise sind die Rotationsventile als Kugelventile mit Ventilkugeln oder Kükenventile mit Drehkegeln als Rotationskörpern ausgeführt. Typisch für solche Fluidkupplungen mit Rotationsventilen ist es, dass die Rotationskörper nach dem Verbinden der Kupplungshälften einzeln und damit sequenziell betätigt werden. Die Fluidkupplung wird zum dichtenden Verbinden von Leitungen und/oder Behältern eingesetzt, um als Fluid flüssige oder gasförmige Medien zu transportieren oder zu fördern. Jeweils wird der Rotationskörper durch eine Schaltwelle, die eine Antriebswelle ist, angetrieben und zumeist durch eine 90°-Drehung von der geschlossenen Drehposition in die geöffnete Drehposition bzw. umgekehrt gebracht. Der Antrieb der Antriebswelle erfolgt entweder manuell über einen Griff oder durch ein geeignetes motorisches Mittel automatisch. Die Fluidkupplung muss gegen Fehlbedienungen gesichert sein. Das heißt, dass bei geschlossenen Rotationsventilen jeweils der Antrieb des Rotationskörpers gesperrt sein muss, solange kein die eine oder die andere Kupplungshälfte bildender Kupplungspartner angekuppelt ist, und dass zudem die Verbindung der gekuppelten Kupplungshälften gesichert sein muss, solange noch eines der Rotationsventile geöffnet ist.

Es sind in die Kupplungsgehäuse integrierte Sicherungs-Getriebe bekannt (z. B. WO 2010/125442 A1; DE 203 14 197 U1), die jeweils mit der Antriebswelle des Rotationsventils zusammenwirken. Um ein unbeabsichtigtes Lösen der Kupplungsverbindung zu unterbinden, wird dann, wenn jeweils der Rotationskörper in die das Rotationsventil öffnende Drehstellung gedreht wird, mittels des Sicherungs-Getriebes ein mit der Gehäuseachse paralleler Getriebestift an der Kuppelseite der Kupplungshälfte hervorstehend ausgefahren, wobei er in eine an der gegenüberliegenden Kupplungshälfte ausgebildete Verriegelungsausnehmung eingreift. Um jeweils die Drehverstellung der Antriebswelle des Rotationskörpers bei geschlossenem Rotationsventil bei fehlender Kupplungsverbindung zu sichern, ist es bekannt, in jedem Kupplungsgehäuse zusätzlich einen federbelasteten achsparallelen zweiten Sicherungsstift zu lagern, der bei von einander getrennten Kupplungshälften an der Kuppelseite federbelastet hervorsteht und sich in diesem Zustand im Sperreingriff mit der Antriebswelle befindet, um deren Drehung zu sperren. Bei aneinandergefügten Kupplungshälften wird der zweite Sicherungsstift in das Kupplungsgehäuse zurückgedrängt, wodurch die Antriebswelle zur Drehung freigegeben wird. Die bekannten Sicherungsmittel erfordern einen erheblichen fertigungs- und bautechnischen Aufwand mit einer Vielzahl von Einzelteilen und Funktionsflächen in jedem Kupplungsgehäuse. Insbesondere sind spezielle Bohrungen, Getriebeteile, Verzahnungen und Federspeicher in der Wandung eines jeden Kupplungsgehäuses auszubilden und unterzubringen. Es resultieren Verschleiß und eine erhebliche Anfälligkeit für Betriebsstörungen. Herstellungskosten sind durch die Vielzahl der Bauteile erhöht. Eine serielle Fertigung mit großer Produktionsgeschwindigkeit ist behindert.

Der Erfindung liegt das Ziel zugrunde, einfache Antriebe der Rotationsventile vorzusehen und zugleich Sicherungsmittel zum Sichern der Drehverstellung der beiden Kupplungshälften um die Kupplungsachse im gekuppelten Zustand der Fluidkupplung sowie zudem zum Sichern der Drehverstellung der Rotationskörper der Rotationsventile bei geschlossenen Rotationsventilen der von der Fluidkupplung getrennten Kupplungshälften zu vereinfachen und zu verbessern. Die Vereinfachung soll bewirken, dass Verschleißteile von Sicherungsmitteln herkömmlicher Fluidkupplungen entfallen. Zudem soll mit der Vereinfachung auch eine schnelle Montage sowie vereinfachte Bauweise und damit kostengünstige Herstellung der Kupplungshälften verbunden sein.

Die Ziele werden erfindungsgemäß in Verbindung mit den Merkmalen der eingangs genannten Kupplungshälfte dadurch erreicht, dass an der Kupplungshälfte eine schaltbare Antriebseinrichtung angeordnet und eingerichtet ist, die eine Antriebswelle zur steuernden Antriebsverbindung und Sicherungsverbindung mit einer Ventilwelle eines Rotationskörpers eines Rotationsventils einer entsprechend gleichen ankuppelbaren Kupplungshälfte aufweist, und dass das der Kupplungshälfte eigene Rotationsventil eine außen am Kupplungsgehäuse freiliegende Ventilwelle zur Antriebsverbindung und Sicherungsverbindung mit einer entsprechenden steuernden Antriebseinrichtung der entsprechend gleichen Kupplungshälfte aufweist. Gleichermaßen werden die Ziele in Verbindung mit den Merkmalen der eingangs genannten Fluidkupplung erreicht.

Erfindungsgemäß erreicht man eine Reihe von Vorteilen. Mit jeweils der Anordnung der Antriebseinrichtung an der einen Kupplungshälfte zum Schalten, also zum Antrieb des Rotationsventils der anderen Kupplungshälfte gelingt es erfindungsgemäß, dass die Antriebswelle des Rotationsventils jeweils der einen Kupplungshälfte das Schaltelement ist, mit dem die Ventilwelle der anderen Kupplungshälfte betätigbar ist. Diese Gestaltung hat zur Folge, dass die Schaltpositionen, also die Drehpositionen der Rotationskörper auf einfache Weise im Zustand der miteinander verbundenen, also gekuppelten Kupplungshälften wechselseitig steuerbar sind. Es ist bewirkt, dass jeweils die Schaltung der Antriebswelle der einen Kupplungshälfte den Ventilzustand der anderen Kupplungshälfte bestimmt, so dass die wechselseitige Schalt- und Steuerverbindung ohne herkömmlich erforderliche Sicherungsteile durch den gekuppelten Zustand der Kupplungshälften direkt bestimmt wird. Das heißt, dass jede der Kupplungshälften unter Verwendung der beiden Antriebseinrichtungen zum gesicherten Schalten auf das Vorhandensein der gegenüberliegenden Kupplungshälfte angewiesen ist. Es gelingt auf einfache Weise, dass allein durch Herstellung der beiden Schaltverbindungen zwischen den beiden Kupplungshälften diese im gekuppelten Zustand gegen Drehverstellung um die Kupplungsachse gesichert werden sowie zudem, dass diese Drehverstellung zum Entkuppeln oder Kuppeln der Kupplungshälften nur dann zugelassen wird, wenn sich jedes der Rotationsventile im geschlossenen Zustand befindet. Erfindungsgemäß ist jeweils nur die Arretierverbindung der Antriebseinrichtung an der einen Kupplungshälfte mit dem Rotationskörper an der anderen Kupplungshälfte erforderlich. Jeweils ist die Antriebswelle an der einen Kupplungshälfte mit der Ventilwelle der anderen Kupplungshälfte drehfest und lösbar verbunden. Da diese Verbindung die relative Drehverstellung der Kupplungshälften um die Kupplungsachse nur dann freigibt, wenn die Rotationsventile geschlossen sind, ist erreicht, dass die Rotationsventile der von der Fluidkupplung getrennten Kupplungshälften sicher geschlossen sind und nur nach dem Zusammenfügen zur Fluidkupplung mittels der kreuzweise angeordneten Arretierverbindungen ohne Weiteres geöffnet werden können. Damit bilden die Arretierverbindungen einfache Sicherungsmittel sowohl zum Sichern der Kupplungsverbindung als auch zum Sichern der geschlossenen Rotationsventile der von der Fluidkupplung getrennten Kupplungshälften. Herkömmliche Verschleißteile bildende Getriebeteile sind beseitigt. Man erreicht eine optimale Fertigungszeit, insbesondere in Mengenproduktion, relativ geringe Herstellungskosten und verbesserte Standzeit.

Unter der entsprechend gleichen Ausbildung der Kupplungshälften ist zu verstehen, dass Übereinstimmung hinsichtlich der Art der Rotationsventile, der Antriebseinrichtungen und der Kupplungsmittel besteht. Das heißt, dass die Erfindung zunächst vollständig identische Kupplungshälften und damit eine sogenannte Unisex-Kupplung erfasst.

Zum Beispiel können die Kuppelseiten aber auch mit unterschiedlichen Dichtflächen ausgebildet sein, um zum Beispiel eine vakuumfähige Kupplung zu erhalten. Auch ist es möglich, dass die Rotationskörper asymmetrisch sind, so dass sie beim Verbinden der Kupplungshälften und Öffnen der Rotationsventile zum Ausbilden einer Trockenkupplung ineinander fassen.

Eine Gestaltung der Fluidkupplung besteht darin, dass jeweils die Antriebseinrichtung an der einen Kupplungshälfte ein an dem Kupplungsgehäuse festes Antriebsverbindungsstück aufweist, das die Antriebswelle, die um eine Antriebsachse, die quer zur Gehäuseachse der Kupplungshälfte gerichtet ist, drehbar lagert, und dass die Ventilwelle außen an dem Kupplungsgehäuse der anderen Kupplungshälfte zum Antrieb der Drehung des Rotationskörpers des zugehörigen Rotationsventils freiliegt, wobei die Antriebswelle und die Ventilwelle, die jeweils Bestandteile desselben Kupplungsgehäuses sind, mit einem Umfangswinkel zueinander versetzt angeordnet sind, wobei jeweils das die Antriebswelle lagernde Antriebsverbindungsstück, das an dem einen Kupplungsgehäuse fest ist, das andere Kupplungsgehäuse längs der Gehäuseachse außen soweit überragt, dass dort in dem Zustand der lösbaren Verbindung der beiden Kupplungshälften die Arretierverbindung eingerichtet ist. Die Antriebsverbindungsstücke lassen sich herstellungstechnisch einfach als vorzugsweise einstückige Bestandteile der Kupplungsgehäuse herstellen. Die Antriebsverbindungsstücke lassen sich als flache Laschen mit konkaver Innenkontur herstellen, die an die entsprechende konvexe Außenkontur des insbesondere zylindrischen Kupplungsgehäuses, das sie teilweise übergreifen, angepasst sind. Um die Antriebsverbindungsstücke am Gehäuseumfang quer zur Gehäuseachse als möglichst großflächige, vorteilhaft an die Zylinderform des Kupplungsgehäuses formangepasste gekrümmte Flächensegmente auszubilden und zudem die Antriebsverbindungsstücke der beiden Kupplungshälfte mit übereinstimmender Umfangsanordnung vorzusehen, beträgt der Umfangswinkel, mit dem die Antriebswelle und die Ventilwelle an jedem Kupplungsgehäuse versetzt angeordnet sind, 180°.

Eine besonders vorteilhafte und bevorzugte Gestaltung besteht darin, dass jeweils das Antriebsverbindungsstück der Antriebseinrichtung der einen Kupplungshälfte als eine einen Bestandteil des zugehörigen Kupplungsmittels bildende Kupplungsklaue mit einem Greifrand ausgebildet ist, der zur lösbaren, die Kuppelseiten aneinander spannenden Verbindung der Kupplungshälften einen zugeordneten Radialvorsprung am Kupplungsgehäuse der anderen Kupplungshälfte lösbar hinterfasst, wobei der Greifrand und der Radialvorsprung ein Klauenverbindungspaar bilden und durch die relative Drehverstellung der beiden Kupplungshälften um die Kupplungsachse zum Aneinanderspannen der beiden Kupplungshälften in Eingriff und entsprechend außer Eingriff setzbar sind. Mit dieser Gestaltung erreicht man einen weiteren wesentlichen Vorteil. Die Antriebsverbindungsstücke sind nicht nur Bestandteile der Antriebseinrichtungen, sondern sie bilden zugleich zwei Kupplungsklauen der Fluidkupplung. Dadurch ist vorzugsweise an jeder Kupplungshälfte nur eine einzige Kupplungsklaue vorgesehen, die integrierter Bestandteil der Antriebseinrichtung ist. Man erzielt eine weitere erhebliche Vereinfachung der Bauform sowie der Fertigung der auch mit den Kupplungsklauen übereinstimmenden Kupplungshälften. Demgegenüber weisen herkömmliche Fluidkupplungen der genannten Art allgemein zwei Kupplungsklauen pro Kupplungshälfte auf.

Die Erfindung ist nicht darauf eingeschränkt, dass die Antriebsverbindungsstücke als Bestandteile des Kupplungsmittels ausgebildet oder nur dadurch gebildet werden. So ist es auch möglich, dass zur Ausbildung des Kupplungsmittels jede Kupplungshälfte mit herkömmlichen korrespondierenden Kupplungselementen versehen ist, die durch segmentartige, klauenartige, achsparallele Vorsprünge und komplementäre Vertiefungen zusammenwirken, um Verriegelungsflächen dieser Teile in Eingriff zu bringen, und dadurch die Kupplungshälften fest gegeneinander zu ziehen. Eine solche bekannte bajonettartige Verbindung der Kupplungshälften behindert jedoch die konstruktive Anordnung einer Trennstellendichtung sowie einer Ventildichtung an der Kuppelseite, die im radialen Bereich zwischen den Klauen anzuordnen sind. Die Folge ist, dass der Rotationskörper des Rotationsventils in Achsrichtung um ein bestimmtes Maß in das Kupplungsgehäuse hinein versetzt anzuordnen ist, um ausreichend drucktragende Wandstärken zu erzielen. Dies hat zudem zur Folge, dass eine Restmenge des Fluids, die in der Fluidkupplung beim Schließen der Rotationsventile zwischen diesen anfällt, erhöht ist. Diese Beeinträchtigung kann erfindungsgemäß einfach dadurch beseitigt werden, dass anstelle der herkömmlichen bajonettartigen Kupplungsmittel, die zudem herstellungstechnisch aufwendig sind, die Antriebsverbindungsstücke als Kupplungsklauen vorgesehen werden. Mittels dieser sehr einfachen Klauenverbindung lassen sich die Rotationskörper zum Verringern des Anfallens von Restmenge relativ dicht an die Kuppelseite und damit an die Trennfläche heranbringen, wobei zum Einhalten erforderlicher Wandstärken auch der Querschnittsdurchmesser der Kupplungshälfte relativ klein gehalten werden kann.

Vorteilhaft ist jeweils außen an dem Kupplungsgehäuse ein Gehäusesockel ausgebildet, der die Ventilwelle des Rotationskörpers insbesondere versenkt aufnimmt.

Eine fertigungstechnisch weiter vereinfachte und besonders kompakte Ausbildung besteht darin, dass an jeder Kupplungshälfte der Radialvorsprung des Kupplungsmittels durch einen von der Kuppelseite abgewandten rückwärtigen, quer zur Gehäuseachse gerichteten Sockelrand des Gehäusesockels gebildet ist, der die Ventilwelle aufnimmt. Endseitig freie, Radialvorsprünge bildende Querränder der Antriebsverbindungsstücke können die Greifränder bilden. Greifränder als Radialvorsprünge können auch an der Innenseite der Antriebsverbindungsstücke zum Hintergreifen von korrespondierenden Teilen am Kupplungsgehäuse vorgesehen sein. Mit einer solchen Ausbildung erreicht man, dass die beiden Klauenverbindungspaare im Bereich zwischen den beiden Arretierverbindungen angeordnet sind, wobei sie insbesondere in der Nähe der Kuppelseite in einer zu dieser parallelen Vertikalebene vorgesehen werden können.

Vorteilhaft können besondere Maßnahmen vorgesehen werden, um die Kupplungsverbindung mit den Kupplungsklauen, die durch die Antriebsverbindungsstücke gebildet sind, besonders zu fixieren und biegesteif auszubilden. Eine vorteilhafte Maßnahme besteht darin, dass zum Zentrieren der Verbindung der Kupplungshälften jedes der beiden Klauenverbindungspaare konisch zentriert ist, wobei der Greifrand und der zugehörige Radialvorsprung quer zur Kupplungsachse schräg nach außen und, von der Kuppelseite wegweisend, nach hinten gerichtet sind, wobei sie passförmig ineinander fassen. Zum radialen Zentrieren der Kupplungshälften kann auch jeweils am kuppelseitigen Ende des einen Kupplungsgehäuses ein Gehäuseaußenrand ausgebildet sein, der passförmig in einen komplementären Innenrand des an dem anderen Kupplungsgehäuse angeordneten Antriebsverbindungsstückes einfasst.

Gemäß einer vorteilhaften Gestaltung ist jeweils das Antriebsverbindungsstück der einen Kupplungshälfte durch ein Flächensegment gebildet, das sich zumindest im Wesentlichen über ein Viertel eines zylindrischen Querumfangs des Kupplungsgehäuses erstreckt und dem zum Verbinden der Kupplungshälften an der jeweils anderen Kupplungshälfte ein entsprechender freier Umfangsbereich außen am Kupplungsgehäuse zugeordnet ist. In Verbindung mit der versetzten Anordnung von Antriebswelle und Ventilwelle bzw. der Antriebsverbindungsstücke an der Fluidkupplung mit einem Umfangswinkel von 180° erreicht man eine besonders vorteilhafte Gestaltung zum Zusammenfügen der Kupplungshälften. Die Kupplungshälften lassen sich dadurch aneinander bringen, dass sie zunächst in Richtung der Kupplungsachse bei maximaler Drehverstellung der Kupplungshälften um die Kupplungsachse entlang von achsparallelen freien Längsrändern der Antriebsverbindungsstücke aneinander gleiten, bis die Kuppelseiten in der Trennebene aneinanderstoßen. Es bedarf dann nur noch einer Drehverstellung um genau oder ca. 90° um die Kupplungsachse, um die Kupplungshälften in die gekuppelte Verbindung mit dadurch hergestellten Arretierverbindungen zu bringen.

Vorteilhaft wird jeweils die Arretierverbindung durch eine Formschlussverbindung mit an der Antriebseinrichtung und an dem zum Antrieb zugehörigen Rotationskörper angeordneten, Arretierelemente bildenden Verbindungspartnern gebildet. Dabei wird die drehfeste und lösbare Verbindung besonders einfach dadurch erreicht, dass die Verbindungspartner der Formschlussverbindung durch wenigstens ein Federelement sowie, diesem zugeordnet, wenigstens eine erste Nut, die mit dem zur Arretierverbindung zugehörigen Rotationskörper drehfest verbunden ist, gebildet sind. Das wenigstens eine Federelement ist im Zustand der verbundenen und gegen ihre relative Drehverstellung gesperrten Kupplungshälften in der wenigstens einen ersten Nut gefangen gehalten, wodurch die Drehverstellung der Kupplungshälften um die Kupplungsachse gesperrt wird. Vorteilhaft wird wenigstens eine zweite Nut vorgesehen, die ortsfest am Kupplungsgehäuse ausgebildet ist und mit der wenigstens einen ersten Nut nur in einer zur Schließstellung des zugehörigen Rotationsventils gehörenden Drehposition der wenigstens einen erste Nut in Umfangsrichtung quer zur Kupplungsachse fluchtet, wobei das wenigstens eine Federelement zum Verlassen und Herstellen der gefangenen Halteverbindung und damit zur Freigabe der relativen Drehverstellung der Kupplungshälften um die Kupplungsachse durch die wenigstens eine fluchtende zweite Nut hindurchführbar ist. Vorteilhaft wird jeweils die Arretierverbindung mit einem Stoppanschlag ausgebildet, der die relative Drehverstellung der Kupplungshälften um die Kupplungsachse zum Herstellen der Kupplungsverbindung definiert begrenzt.

Die erste Nut wird vorteilhaft als insbesondere konvex gekrümmter Durchgangsschlitz in einer kreisförmigen Stirnseite der Ventilwelle ausgebildet. Die im Querschnitt kreisförmige Ventilwelle liegt dann in einer Gehäuseausnehmung mit entsprechendem Kreisquerschnitt.

Die Formschlussverbindung kann auch mit einer Kodierung versehen sein, die durch Formgestaltung der Verbindungspartner individualisiert ist. Die Kodierung besteht darin, dass die Verbindungspartner aufeinander angepasste Formen aufweisen, die nach Art einer Schlüssel-/Schlossverbindung zusammengehören. Entsprechend lassen sich nur zusammengehörige Kupplungshälften miteinander kuppeln. Zum Beispiel ist die Kodierung durch die Schlitznut mit passförmiger Flachfeder gebildet. Ein weiteres Beispiel ist eine dreieck- oder keilförmige Nut in der Stirnseite der Ventilwelle mit zugehöriger, entsprechend geformter Feder der Arretierverbindung, die insbesondere durch ihre Verjüngung und/oder einen Steg einen Stoppanschlag bildet.

An jeder Kupplungshälfte lassen sich der Fluiddurchgang des Rotationskörpers und die Arretierverbindung besonders einfach zum Einstellen von Schaltwinkeln aneinander anpassen. Vorzugsweise wird der Fluiddurchgang so angeordnet, dass wenigstens bis zu einem Schaltwinkel von 10° das Rotationsventil geschlossen ist, wobei der Schaltwinkel der Winkel ist, um den der Rotationskörper um seine Ventilachse aus der Drehposition im Zustand der freien relativen Drehverstellung der Kupplungshälften zum Öffnen der Rotationsventile drehbar ist, wobei das Rotationsventil bei dem Schaltwinkel von 90° vollständig geöffnet ist.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als strukturell selbständiges Detailbeispiel für andere nicht oder nicht vollständig beschriebene, unter die Erfindung fallende Ausführungen und Gestaltungen zu verstehen. Gestaltungen oder Merkmale, die übergeordnete selbstständige Relevanz haben, werden insbesondere mit der Angabe "allgemein" hervorgehoben.

Es zeigen
- Fig. 1: im Mittenlängsschnitt eine erfindungsgemäße Fluidkupplung in lösbarer Kupplungsverbindung von zwei gleichen Kupplungshälften mit geschlossenen Rotationsventilen,
- Fig. 2: in axonometrischer Ansicht eine von der Fluidkupplung gemäß Fig. 1 abgetrennte Kupplungshälfte mit geschlossenem Rotationsventil,
- Fig. 3A und 3B: in Längsansicht die Fluidkupplung gemäß Fig. 1 sowie einen Querschnitt gemäß A-A durch eine Arretierverbindung an einer der Kupplungshälften bei geschlossenem Rotationsventil,
- Fig. 4A und 4B: in Längsansicht die Kupplungshälfte gemäß Fig. 1 sowie einen Querschnitt B-B durch die Arretierverbindung bei geöffnetem Rotationsventil und
- Fig. 5A und 5B: Gestaltungen von Ventilwellen von Arretierverbindungen erfindungsgemäßer Kupplungshälften.

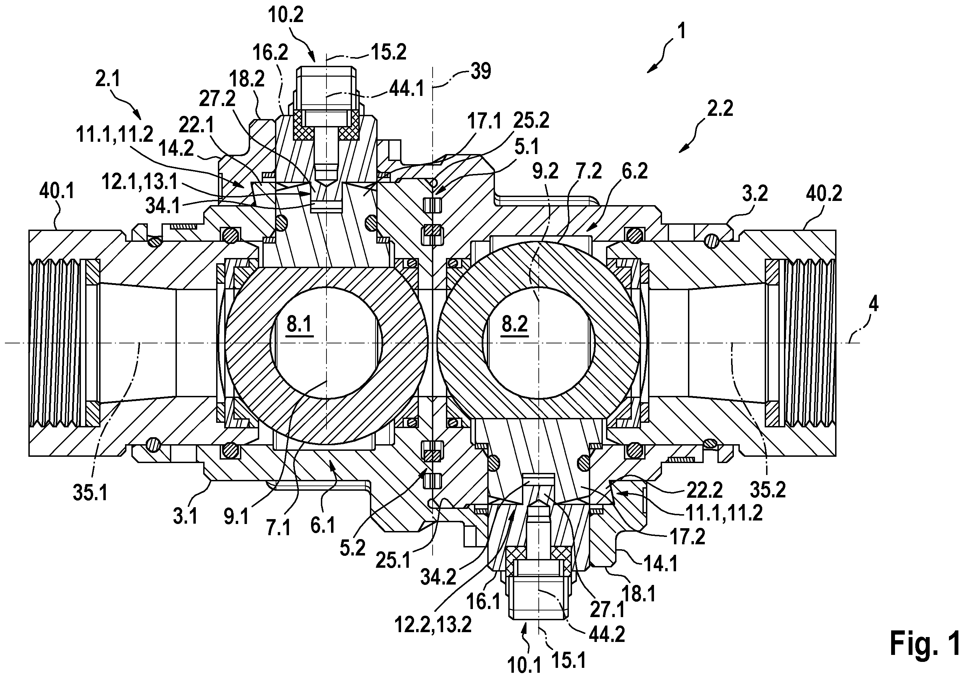

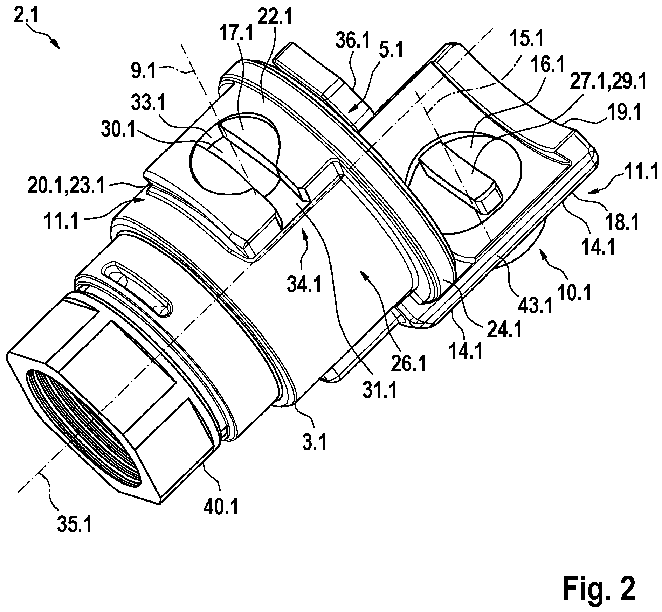

Eine Fluidkupplung 1 gemäß Fig. 1 ist allgemein aus zwei gleichen, zu einer Trennebene 39 symmetrischen erfindungsgemäßen Kupplungshälften 2.1 und 2.2 zusammengefügt. In der Fluidkupplung 1 fallen Gehäuseachsen 35.1/35.2 der beiden Kupplungshälften 2.1/2.2 mit einer mittigen Kupplungsachse 4 zusammen. Fig. 2 zeigt die linke der beiden Kupplungshälften in Fig. 1 mit der Zusatzziffer 1 der Bezugszeichen. Die zweite, in Fig. 1 rechte und im Ausführungsbeispiel identische Kupplungshälfte 2.2 wird, wie zu den weiteren zugehörigen Figuren, mit Bezugszeichen beschrieben, die mit der Zusatzziffer 2 versehen sind.

Obwohl die Kupplungshälften 2.1/2.2 im Ausführungsbeispiel vollkommen identisch sind, trifft die Beschreibung zu erfindungsgemäßen Arretierverbindungen 13.1/13.2 gleichermaßen und allgemein auf erfindungsgemäße Kupplungshälften mit Rotationsventilen zu, bei denen die Kupplungshälften an ihren Kuppelseiten zum Beispiel mit unterschiedlichen Dichtmitteln oder mit zum Verbinden ineinandergreifenden Rotationskörpern von Rotationsventilen ausgebildet sind. Auch können Kupplungsanschlussteile der Kupplungshälften wie Stutzen für Leitungen, Behälter od. dgl. unterschiedlich gestaltet sein.

Im Ausführungsbeispiel weist jede Kupplungshälfte 2.1/2.2 ein Rotationsventil 6.1/6.2 mit einem Rotationskörper 7.1/7.2 in Form einer Ventilkugel auf. Der Rotationskörper 7.1/7.2 ist an einem Kupplungsgehäuse 3.1/3.2, das kreiszylindrische Abschnitte aufweist, um eine Ventilachse 9.1/9.2 drehbar gelagert, die senkrecht zu der Gehäuseachse 35.1/35.2 gerichtet ist. Die Gehäuseachse 35.1/35.2 ist die Zylinderachse des Kupplungsgehäuses 3.1./3.2. Jede Kupplungshälfte 2.1/2.2 weist ein Kupplungsanschlussteil 40.1/40.2 auf, das gedichtet in das Kupplungsgehäuse 3.1/3.2 eingepasst ist. Achsparallele Durchgangsräume des Kupplungsgehäuses 3.1/3.2 und des Kupplungsanschlussteils 40.1/40.2 bestimmen für das Fluid einen Strömungsweg, in dem der Rotationskörper 7.1/7.2 angeordnet ist.

Im Ausführungsbeispiel ist das Kupplungsanschlussteil 40.1/40.2 mit einem Schraubgewinde zur Schraubverbindung mit einer nicht dargestellten Leitung ausgestattet. Das eine Kupplungsgehäuse 3.1/3.2 der einen Kupplungshälfte 2.1/2.2 weist zur Kuppelverbindung mit der als Gegenstück vorgesehenen anderen gleichen Kupplungshälfte 2.2/2.1 eine Kuppelseite 5.1/5.2 auf. Ineinander eingepasste Teile sowie relativ zueinander bewegbare Teile jeder Kupplungshälfte 2.1/2.2 sind mit üblichen Dichtmitteln wie Dichtringen gegen Fluiddurchtritt abgedichtet.

Der Rotationskörper 7.1/7.2 weist einen diesen durchquerenden Fluiddurchgang 8.1/8.2 auf. In Abhängigkeit von der Drehposition des Rotationskörpers 7.1/7.2 um die Ventilachse 9.1/9.2 ist das Rotationsventil 6.1/6.2 entweder geöffnet, wenn der Fluiddurchgang 8.1/8.2 parallel mit der Gehäuseachse 35.1/35.2, also achsparallel ausgerichtet ist, oder geschlossen, wenn der Fluiddurchgang 8.1/8.2 in eine Position quer und schließlich senkrecht zur Gehäuseachse 35.1/35.2 bzw. zu dem Fluidweg gebracht wird. Bei geöffneten Rotationsventilen 6.1/6.2 wird der Strömungsweg durch die Fluidkupplung freigegeben.

Der Rotationskörper 7.1/7.2 kann allgemein in jeder geeigneten Weise mit Lagerwellen wie Zapfen oder dergleichen, die mit dem Rotationskörper 7.1/7.2 drehfest verbunden sind, um die Ventilachse 9.1/9.2 an dem Kupplungsgehäuse 3.1/3.2 drehbar gelagert sein. Eine Lagerwelle der Wellenlagerung ist durch eine Ventilwelle 17.1/17.2 gebildet, mittels der der Rotationskörper 7.1/7.2 um die Ventilachse 9.1/9.2 in die Schließstellung und die Öffnungsstellung des Rotationsventils 6.1/6.2 drehbar, das heißt schaltbar ist.

Erfindungsgemäß ist eine Antriebswelle 16.1/16.2 in besonderer Weise als Bestandteil einer Antriebseinrichtung 10.1/10.2 und der Arretierverbindung 13.1/13.2 ausgebildet. Wesentliche Merkmale der Arretierverbindung 13.1/13.2, die allgemein durch miteinander verbundene Arretierelemente bestimmt ist, sind insbesondere aus Fig. 1, Fig. 3A und B sowie Fig. 4A und B ersichtlich. An jeder Kupplungshälfte 2.1/2.2 ist eine der Antriebseinrichtungen 10.1/10.2 mit zugehöriger Antriebswelle 16.1/16.2 zur Verbindung mit der Ventilwelle 17.2/17.1 jeweils der anderen Kupplungshälfte 2.2/2.1 angeordnet.

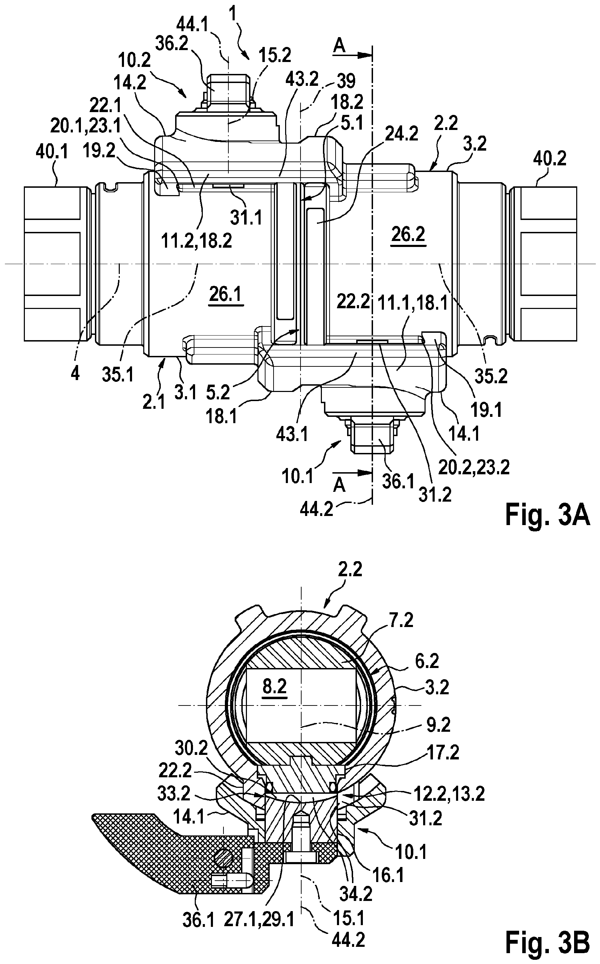

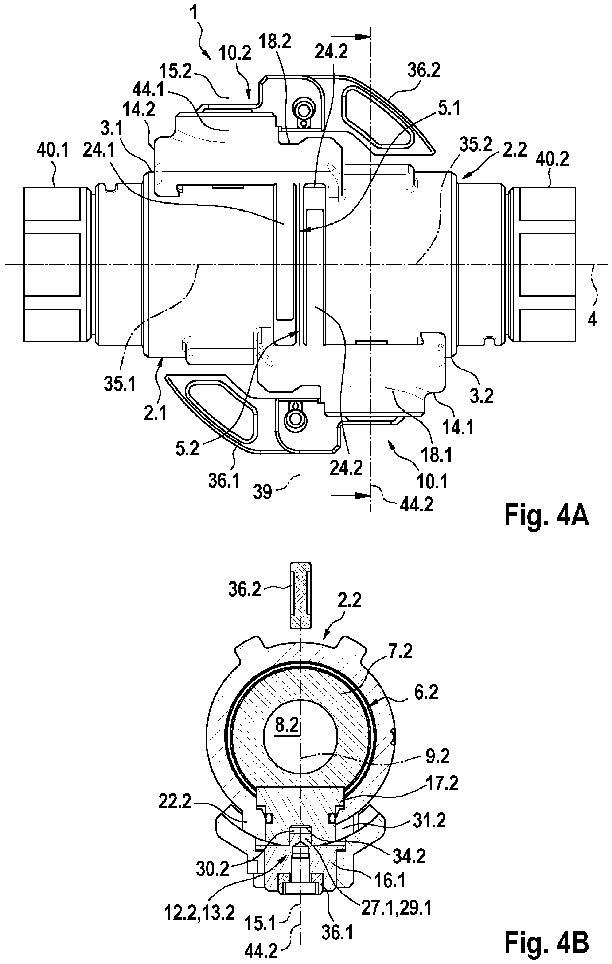

In Fig. 3A und 3B sowie 4A und 4B ist die Antriebseinrichtung 10.1, die an der Kupplungshälfte 2.1 angeordnet und dem Rotationsventil 6.2 der Kupplungshälfte 2.2 zugeordnet ist, näher dargestellt. Die Antriebseinrichtung 10.1 weist die Antriebswelle 16.1 auf, die der Ventilwelle 17.2 des Rotationskörpers 7.2 des Rotationsventils 6.2 zugeordnet ist. Zu dieser Zuordnung gehört an der Kupplungshälfte 2.2 die Arretierverbindung 13.2, die in dem Zustand der miteinander verbundenen Kupplungshälften 2.1/2.2 die Antriebswelle 16.1 mit der Ventilwelle 17.2 drehfest verbindet. Durch diese Verbindung sind die Drehpositionen des Rotationskörpers 7.2 mittels der an der Kupplungshälfte 2.1 angeordneten Antriebseinrichtung 10.1 steuerbar, und zudem ist eine relative Drehverstellung der Kupplungshälften 2.1/2.2 um die Kupplungsachse 4 mit Ausnahme der Freigabe der relativen Drehverstellung bei geschlossenen Rotationsventilen 6.1/6.2 gesperrt.

Die Antriebseinrichtung 10.1 weist allgemein ein an dem Kupplungsgehäuse 3.1 festes Antriebsverbindungsstück 14.1 auf, das parallel mit der Gehäuseachse 35.1 und infolgedessen auch parallel mit der Kupplungsachse 4 vor die Kuppelseite 5.1 ragt und die Antriebswelle 16.1 lagert, wie dies insbesondere auch aus Fig. 2 ersichtlich ist. Die Antriebswelle 16.1 ist so weit von der Trennebene 39 bzw. der Kuppelseite 5.1 distanziert, dass sie mit der Ventilwelle 17.2 in einer gemeinsamen, zur Kupplungsachse 4 senkrechten Verbindungsebene 44.2 liegt. Die Antriebswelle 16.1 der steuernden Antriebseinrichtung 10.1 weist ein mit der Ventilwelle 17.2 der Kupplungshälfte 2.2 zur Drehverstellung drehfest verbindbares (Fig. 2) und drehfest verbundenes (Fig. 1, Fig. 3A und 3B, Fig. 4A und 4B) erstes Arretierelement 27.1 auf, das in die definierte, das Rotationsventil 6.2 schließende Drehposition setzbar ist, nur in der die Arretierverbindung 13.2 mit der Ventilwelle 17.2 herstellbar und lösbar ist.

Die Ventilwelle 17.2 des Rotationskörpers 7.2 des Rotationsventils 6.2. weist ein zweites Arretierelement 34.2 auf, das zum Herstellen der das Rotationsventil 6.2 öffnenden, dabei unverlierbaren, nur bei geschlossenem Rotationsventil 6.2 lösbaren Arretierverbindung 13.2 mit dem ersten Arretierelement 27.1 der Kupplungshälfte 2.1 eingerichtet ist.

Das erste Arretierelement 27.1 ist allgemein zum Herstellen einer Formschlussverbindung mit dem zweiten Arretierelement 34.2 der Kupplungshälfte 2.2 ausgebildet. Das erste Arretierelement 27.1 ist ein an der Antriebswelle 16.1 der Antriebseinrichtung 10.1 ausgebildetes Federelement 29.1. Das zweite Arretierelement 34.2 weist zum Herstellen der Formschlussverbindung mit dem Federelement 29.1 eine zugeordnete erste Nut 30.2 auf, die an der den Rotationskörper 7.2 drehbar lagernden Ventilwelle 17.2 ausgebildet ist und mit dieser außen an dem Kupplungsgehäuse 3.2 freiliegt. Die erste Nut 30.2 ist durch einen Durchgangsschlitz gebildet, der in der Stirnseite der im Querschnitt kreisförmigen Ventilwelle 17.2 ausgebildet ist. Das zweite Arretierelement 34.2 weist ein zweite Nut 31.2 auf, die an dem Kupplungsgehäuse 3.2 festliegend angeordnet ist, nach außen offen freiliegt und als quer, das heißt senkrecht zur Gehäuseachse 35.2 gerichtete Nut ausgebildet ist, die nur in einer entsprechend quer gerichteten Drehposition der Ventilwelle 17.2, nämlich in der Drehposition des das Rotationsventil 6.2 schließenden Rotationskörpers 7.2 mit der ersten Nut 30.2 fluchtet. In der Formschlussverbindung ist allgemein das erste Arretierelement 27.1/27.2 mit konkaven Flächen an entsprechende konvexe Flächen des zweiten Arretierelements 34.2/34.1 angepasst.

Die Fig. 3A und 3B sowie auch die Fig. 1 stellen das Rotationsventil 6.2 in der geschlossenen Position dar. In dieser Position befindet sich das Federelement 29.1 der Antriebswelle 16.1 in einer Ebene quer bzw. senkrecht zum Strömungsweg bzw. zu der Gehäuseachse 35.2. Das Federelement 29.1 richtet die erste Nut 30.2, die in das freie Stirnende der Ventilwelle 17.2 eingebracht ist, in die gleiche Umfangsrichtung quer zur Gehäuseachse 35.2 am Umfang des Kupplungsgehäuses 3.2 aus, wobei das Rotationsventil 6.2 geschlossen ist. In dieser Drehposition der Ventilwelle 17.2 fluchtet die erste Nut 30.2 mit der zweiten stationären Nut 31.2. Damit ist erreicht, dass sich die beiden Kupplungshälften 2.1/2.2 relativ zueinander um die Kupplungsachse 4 drehen lassen. Die Freigabe des Federelements 29.1 aus der ersten Nut 30.2 kann nur in eine Richtung durch die zweite Nut 31.2 bzw. in umgekehrte Richtung zum Einführen in die erste Nut 30.2 erfolgen, da die erste Nut 30.2 an der Seite, die der zweiten Nut 31.2 gegenüberliegt, mit einem Stoppanschlag 33.2 geschlossen ist

Das Federelement 29.1 ist im Zustand der verbundenen und gegen ihre relative Drehverstellung um die Kupplungsachse 4 gesperrten Kupplungshälften in der ersten Nut 30.2 gefangen gehalten. Die gefangene Halteverbindung ist dadurch ausgebildet, dass die Ventilwelle 17.2 und damit die erste Nut 30.2 in einer kammerartigen Ausnehmung eines eine Aufpolsterung bildenden Gehäusesockels 22.2 liegt. Der Querschnitt der Ausnehmung entspricht dem zylindrischen Kreisquerschnitt der Ventilwelle 17.2. Mit Ausnahme der Drehposition der Ventilwelle 17.2, in der die erste Nut 30.2 mit der zweiten Nut 31.2 fluchtet, bleibt die erste Nut 30.2 durch den Ausnehmungsrand seitlich geschlossen. In den zu der geschlossenen ersten Nut 30.2 zugehörigen Drehpositionen des Rotationskörpers 7.2 sind die Kupplungshälften 2.1/2.2 zur Fluidkupplung 1 zusammengefügt. In Fig. 4A und 4B ist die Fluidkupplung 1 mit vollständig geöffnetem Rotationsventil 6.2 und der zugehörigen Position der Arretierverbindung 13.2 dargestellt. In der fluchtenden Position der Nuten bildet der Ausnehmungsrand den Stoppanschlag 33.2, der die relative Drehverstellung der Kupplungshälften 2.1/2.2 um die Kupplungsachse 4 zum Verbinden definiert begrenzt.

Jeweils ist die Antriebswelle 16.1/16.2 drehfest, im Ausführungsbeispiel mittels Schraubverbindung, mit einem Betätigungsmittel 36.1/36.2 verbunden, das im Ausführungsbeispiel durch einen Betätigungsgriff gebildet ist. Mit diesem Betätigungsmittel 36.1/36.2 an der einen Kupplungshälfte 2.1/2.2 wird also das Rotationsventil 6.2/6.1 an der entsprechenden anderen Kupplungshälfte 2.2/2.1 drehbar betrieben und damit geschaltet. Das Betätigungsmittel kann durch ein motorisches Mittel wie einen Aktuator zum automatischen Betrieb vorgesehen sein.

Vorstehend sind die Antriebseinrichtung 10.1 und die Arretierverbindung 13.2, wie sie mit Fig. 3B und 4B an der zweiten Kupplungshälfte 2.2 dargestellt wird, beschrieben worden. Zu der Erfindung gehört, dass die Antriebseinrichtung 10.2 und die Arretierverbindung 13.1 an der Kupplungshälfte 2.1 genauso gestaltet und ausgebildet sind, wie dies insbesondere aus Fig. 1 und 2 ersichtlich ist.

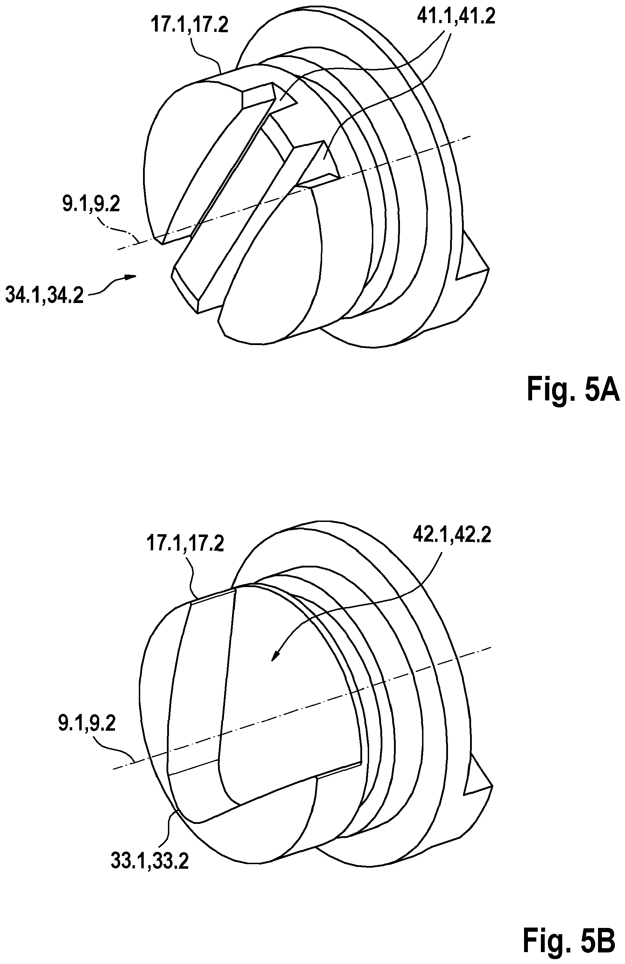

Die ersten Arretierelemente 27.1/27.2 und die zweiten Arretierelemente 34.1/34.2 bilden Verbindungspartner, die allgemein eine Kodierung, das heißt eine Art Schlüssel/ Schloss-Verbindung bilden können. Im Ausführungsbeispiel ist die Schlüssel/Schloss-Verbindung durch das Federelement 29.1/29.2 bestimmt, das flach ist und passgenau in die zugehörige schlitzförmige erste Nut 30.2/30.1 eingreift. Zum Beispiel kann eine Schlüssel/Schloss-Verbindung auch dadurch gebildet sein, dass das zweite Arretierelement 34.1/34.2 eine Doppelnut 41.1/41.2 mit parallel verlaufenden, in die Ventilwelle 17.1/17.2 eingebrachten durchgängigen Parallelnuten aufweist, wie dies in Fig. 5A dargestellt ist. Zu dieser Verbindung gehören zwei passende, parallel angeordnete, nicht dargestellte Federelemente an der zugehörigen Antriebswelle 16.1/16.2 sowie eine nicht dargestellte zweite Nut oder Ausnehmung des zweiten Arretierelements zur fluchtenden Ausrichtung mit der Nut 41.1/41.2. Ein Beispiel für eine Schlüssel/Schloss-Verbindung zeigt auch Fig. 5B. Dort weist das zweite Arretierelement eine in der Ventilwelle 17.1/17.2 ausgebildete dreieckförmige Nut 42.1/42.2 auf, wobei dort ein Stoppanschlag 33.1/33.2 durch eine Stegwand der dreieckförmigen Nut 42.1/42.2 gebildet ist. Zu dieser Verbindung gehören ein entsprechend geformtes, nicht dargestelltes Federelement der Antriebswelle 16.2/16.1 sowie eine nicht dargestellte zweite Nut oder Ausnehmung des zweiten Arretierelements zur fluchtenden Ausrichtung mit einer offenen Seite der Nut 42.1/42.2.

Jeweils sind die Antriebswelle 16.1/16.2 und die Ventilwelle 17.1/17.2 am Querumfang der Kupplungshälfte 2.1/2.2 um 180° versetzt angeordnet. Man erreicht in Bezug auf die Trennebene 39 eine spiegelbildliche Gleichheit der beiden Kupplungshälften 2.1/2.2, die die Raumanordnung der Antriebseinrichtungen 10.1/10.2 und damit der Arretierverbindungen 13.1/13.2 besonders günstig gestaltet und die Handhabung der Kupplungshälften 2.1/2.2 zum Verbinden vereinfacht, wie dies mit Fig. 1 bis 4B dargestellt ist. Der Umfangsversatz der Antriebswelle und der Ventilwelle am Umfang jeweils einer der beiden Kupplungshälften ist jedoch nicht auf 180° beschränkt. Die Antriebswelle und die Ventilwelle an jeweils einer Kupplungshälfte müssen nicht in einer Vertikalebene liegen, wobei jedoch der Umfangsversatz der zur Fluidkupplung zugehörigen Kupplungshälften gegensinnig mit gleichen Umfangswinkeln vorzusehen ist.

Jede Kupplungshälfte 2.1/2.2 ist mit einem Kupplungsmittel 11.1/11.2 ausgestattet, derart, dass die beiden Kupplungshälften 2.1/2.2 zum Aneinanderfügen in der Linie der Kupplungsachse 4 durch relative Drehverstellung um die Kupplungsachse 4 mit ihren Kuppelseiten 5.1/5.2 zur Spannverbindung aneinanderziehbar bzw. lösbar sind. Zum Beispiel können als Kupplungsmittel nicht dargestellte herkömmliche Verbindungsteile einer bajonettartigen Kuppelverbindung vorgesehen sein. Eine besondere Ausgestaltung der Erfindung besteht jedoch darin, dass, wie in den Fig. 1 bis 4B dargestellt, jeweils das Antriebsverbindungsstück 14.1/14.2 der Antriebseinrichtung 10.1/10.2 jeder Kupplungshälfte 2.1/2.2 in Form einer einzigen Kupplungsklaue 18.1/18.2 einen Bestandteil des Kupplungsmittels 11.1/11.2 bildet.

Die Kupplungsklaue 18.1/18.2 weist einen Greifrand 19.1/19.2 auf, der zur lösbaren, die Kuppelseiten 5.1/5.2 aneinander spannenden Verbindung einen zugeordneten Radialvorsprung 20.2/20.1 am Kupplungsgehäuse 3.2/3.1 der jeweiligen anderen Kupplungshälfte 2.2/2.1 lösbar hinterfasst. Wechselseitig bilden jeweils der Greifrand 19.1/19.2 und der Radialvorsprung 20.2/20.1 ein Klauenverbindungspaar und sind durch relative Drehverstellung der beiden Kupplungshälften 2.1/2.2 um die Kupplungsachse 4 in Eingriff und entsprechend außer Eingriff setzbar sind. An jeder Kupplungshälfte 2.1/2.2 ist der Radialvorsprung 20.1/20.2 durch einen von der Kuppelseite 5.1/5.2 abgewandten rückwärtigen Sockelrand 23.1/23.2 des Gehäusesockels 22.1/22.2 gebildet, der die Ventilwelle 17.1/17.2 versenkt aufnimmt.

Jedes der beiden Klauenverbindungspaare ist konisch zentriert, wobei der Greifrand 19.1/19.2 und der zugehörige Radialvorsprung 20.2/20.1 quer zur Kupplungsachse 4 schräg nach außen und, von der Kuppelseite 5.1/5.2 wegweisend, nach hinten gerichtet sind und passförmig ineinanderfassen. Ein Vorteil der konischen Zentrierung ist, dass damit die Kupplungshälften 2.1/2.2 besonders biegesteif verbunden und radial zueinander unverschiebbar festgelegt sind. Ein weiteres Mittel zum Zentrieren der Verbindung der Kupplungshälften 2.1/2.2, wodurch insbesondere die Ausbildung der Kupplungsmittel 11.1/11.2 nur mit den beiden Kupplungsklauen 18.1/18.2 optimiert wird, besteht darin, dass jeweils am kuppelseitigen Ende des einen Kupplungsgehäuses 3.1/3.2 ein Gehäuseaußenrand 24.1/24.2 ausgebildet ist, der passförmig in einen komplementären Innenrand 25.2/25.1 des an dem anderen Kupplungsgehäuse 3.2/3.1 angeordneten Antriebsverbindungsstückes 14.2/14.1 einfasst, wie dies insbesondere aus Fig. 1 ersichtlich ist.

Wie besonders deutlich aus Fig. 2, 3A und 4A hervorgeht, ist jeweils das Antriebsverbindungsstück 14.1/14.2 und damit jeweils die Kupplungsklaue 18.1/18.2 allgemein durch ein flaches Flächensegment gebildet, das sich in Umfangsrichtung quer zur Gehäuseachse 35.1/35.2 zumindest etwa über ein Viertel des zylindrischen Umfangs des Kupplungsgehäuses 3.1/3.2 bzw. der Fluidkupplung 1 erstreckt. Dem Flächensegment ist an der jeweils anderen Kupplungshälfte 2.2/2.1 ein entsprechender freier Umfangsbereich 26.1/26.2 außen am Kupplungsgehäuse 3.2/3.1 zugeordnet. Einerseits erreicht man mit diesen Flächensegmenten, dass die Kupplungsklaue 18.1/18.2 ein besonders flaches, dennoch zum Kuppeln hoch belastbares Bauteil ist, und andererseits lassen sich die Kupplungshälften 2.1/2.2 in besonderer Weise geführt aneinanderfügen.

Zum Herstellen der erfindungsgemäßen Arretierverbindungen 13.1/13.2 werden die Kupplungshälften 2.1/2.2 so positioniert, dass die Flächensegmente der Kupplungsklauen 18.1/18.2 jeweils in einen durch den freien Umfangsbereich 26.1/26.2 gebildeten Raum zwischen dem Antriebsverbindungsstück 14.1/14.2 und dem Gehäusesockel 22.1/22.2 geschoben werden, bis sich die Kuppelseiten 5.1/5.2 in der Trennebene 39 gegenseitig berühren. Dabei befinden sich die beiden Antriebswellen 16.1/16.2 in einem Umfangsabstand von 90° oder ungefähr 90°. Die Führung entsteht allgemein dadurch, dass sich beim Zusammenschieben der beiden Kupplungshälften 2.1/2.2 achsparallele Flanken oder Ränder 43.1/43.2 der Antriebsverbindungsstücke 14.1/14.2 zum Positionieren der Kupplungshälften 2.1/2.2 gleitend berühren. Beim Anschlag der Kuppelseiten 5.1/5.2 aneinander befinden sich dann die Arretiermittel 27.1/27.2 und 34.2/34.1 jeweils in der fluchtenden Position in ihrer Verbindungsebene 44.1/44.2, so dass sich die beiden Kupplungshälften durch Drehung um die Kupplungsachse 4 bis zum Erreichen der Stoppanschläge 33.1/33.2 bequem in ihre Kupplungs-Verbindungsposition setzen lassen. Jeweils über das Betätigungsmittel 36.1/36.2 eingeleitete Momente lassen sich jeweils von der einen Kupplungshälfte 2.1 auf die andere Kupplungshälfte 2.2 zum wechselseitigen Drehantrieb der Rotationskörper 7.1/7.2 der Rotationsventile 6.1/6.2 übertragen. Während jeweils der drehfeste axiale Wellenverbund aus Antriebswelle 16.1/16.2 und Ventilwelle 17.2/17.1 gedreht wird, ist das Federelement 29.1/29.2 in der die Kammer bildenden Ausnehmung der Ventilwelle 17.1/17.2 gefangen.

Wie beschrieben, verbinden die erfindungsgemäßen Antriebseinrichtungen 10.1/10.2 und Arretierverbindungen 13.1/13.2 mit den Arretierelementen 27.1/27.2 und 34.1/34.2 nicht nur die Antriebswellen 16.1/16.2 mit den Ventilwellen 17.2/17.1 in der Fluidkupplung 1. Sie bilden allgemein zugleich Sicherungsmittel 12.1/12.2, die die relative Drehverstellung der Kupplungshälften 2.1/2.2 um die Kupplungsachse 4 zum Sichern der Kupplungsverbindung bei wenigstens einem geöffneten Rotationsventil 6.1/6.2 sperren, während das erste Arretierelement 27.1/27.2 in der kammerartigen Ausnehmung des zweiten Arretierelements 34.2/34.1 gefangen ist, und die zudem das Schließen der beiden Rotationsventile 6.1/6.2 zum Trennen und entsprechend zum Verbinden der Kupplungshälften 2.1/2.2 dadurch sichern, dass die Drehverstellung der Kupplungshälften 2.1/2.2 um die Kupplungsachse 4 nur freigegeben wird, wenn die Rotationsventile 6.1/6.2 beide geschlossen sind, wobei jeweils das erste Arretierelement 27.1/27.2 mit einem Teil des zweiten Arretierelements 34.2/34.1 in Umfangsrichtung fluchtet.

Allgemein werden vorteilhaft jeweils die Ausbildung bzw. Größe des Fluiddurchgangs 8.1/8.2 des Rotationskörpers 7.1/7.2 im zugehörigen Rotationsventil 6.1/6.2 und die zugehörige Arretierverbindung 13.1/13.2 derart aneinander angepasst, dass wenigstens bis zu einem Schaltwinkel von 10° das Rotationsventil 6.1/6.2 geschlossen bleibt. Der Schaltwinkel ist der Winkel, um den der Rotationskörper 7.1/7.2 um seine Ventilachse 9.1/9.2 aus der Drehposition im Zustand der freien relativen Drehverstellung der Kupplungshälften zum Öffnen des Rotationsventils 6.1/6.2 drehbar ist. Bei einem Schaltwinkel von 90° ist das Rotationsventil 6.1/6.2 vollständig geöffnet.

## Patentansprüche

1. Kupplungshälfte (2.1/2.2) einer Fluidkupplung (1), wobei die Kupplungshälfte (2.1/2.2), die ein Kupplungsgehäuse (3.1/3.2) mit Kuppelseite (5.1/5.2) und Gehäuseachse (35.1/35.2) aufweist, ein selbstständiges Kupplungsteil zum Herstellen einer Fluidkupplung (1) mit einem gleichen, durch die entsprechende Kupplungshälfte (2.1/2.2) gebildeten Kupplungsteil ist und wobei die Kupplungshälfte (2.1/2.2) ein Rotationsventil (6.1/6.2) mit einem an dem Kupplungsgehäuse (3.1/3.2) drehbar gelagerten Rotationskörper (7.1/7.2) aufweist, den ein Fluiddurchgang (8.1/8.2) durchquert und dessen Drehstellung zum Öffnen und Schließen des Fluiddurchgangs (8.1/8.2) und damit des Rotationsventils (6.1/6.2)steuerbar ist, **dadurch gekennzeichnet, dass** an der Kupplungshälfte (2.1/2.2) eine schaltbare Antriebseinrichtung (10.1/10.2) angeordnet und eingerichtet ist, die eine Antriebswelle (16.1/16.2) zur steuernden Antriebsverbindung und Sicherungsverbindung mit einer Ventilwelle (17.1/17.2) eines Rotationskörpers (7.2/7.1) eines Rotationsventils (6.2/6.1) einer entsprechend gleichen ankuppelbaren Kupplungshälfte (2.2/2.1) aufweist, und dass das der Kupplungshälfte (2.1/2.2) eigene Rotationsventil (6.1/6.2) eine außen am Kupplungsgehäuse (3.1/3.2) freiliegende Ventilwelle (17.1/17.2) zur Antriebsverbindung und Sicherungsverbindung mit einer entsprechenden steuernden Antriebseinrichtung (10.2/10.1) der entsprechend gleichen Kupplungshälfte (2.2/2.1) aufweist.

2. Kupplungshälfte (2.1/2.2) nach Anspruch 1, **dadurch gekennzeichnet, dass** die Antriebseinrichtung (10.1/10.2) ein an dem Kupplungsgehäuse (3.1/3.2) festes Antriebsverbindungsstück (14.1/14.2) aufweist, das parallel mit der Gehäuseachse (35.1/35.2) vor die Kuppelseite (5.1/5.2) ragt und die Antriebswelle (16.1/16.2) lagert.

3. Kupplungshälfte (2.1/2.2) nach Anspruch 1 oder 2, **dadurch gekennzeichnet, dass** die Antriebswelle (16.1/16.2) und die Ventilwelle (17.1/17.2) am Umfang der Kupplungshälfte (2.1/2.2) um 180° versetzt angeordnet sind.

4. Kupplungshälfte (2.1/2.2) nach einem der Ansprüche 1 bis 3, **dadurch gekennzeichnet, dass** eine Kupplungsklaue (18.1/18.2) der Kupplungshälfte (2.1/2.2) Bestandteil der Antriebseinrichtung (10.1/10.2) ist, wobei die Kupplungsklaue (18.1/18.2) zum Herstellen einer Kupplungsverbindung zusammen mit der entsprechenden Kupplungsklaue (18.2/18.1) der entsprechend gleichen Kupplungshälfte (2.2/2.1) eingerichtet ist.

5. Kupplungshälfte (2.1/2.2) nach Anspruch 4, **dadurch gekennzeichnet, dass** außen an dem Kupplungsgehäuse (3.1/3.2) ein Gehäusesockel (22.1/22.2) ausgebildet ist, der die Ventilwelle (17.1/17.2) des Rotationskörpers (7.1/7.2) aufnimmt und der einen Sockelrand (23.1/23.2) aufweist, der zum Eingriff mit einem Greifrand (19.2/19.2) der Kupplungsklaue (18.2/18.1) der entsprechend gleichen Kupplungshälfte (2.2/2.1) ausgebildet ist.

6. Kupplungshälfte (2.1/2.2) nach einem der Ansprüche 1 bis 5, **dadurch gekennzeichnet, dass** die Antriebswelle (16.1/16.2) der steuernden Antriebseinrichtung (10.1/10.2) ein mit der Ventilwelle (17.2/17.1) des Rotationskörpers (7.2/7.1) des Rotationsventils (6.2/6.1) der entsprechenden Kupplungshälfte (2.1/2.2) zur Drehverstellung drehfest verbindbares erstes Arretierelement (27.1/27.2) aufweist, das in eine definierte, das Rotationsventil (6.2/6.1) schließende Drehposition setzbar ist, nur in der eine Arretierverbindung (13.2/13.1) mit der Ventilwelle (17.2/17.1) der entsprechenden Kupplungshälfte (2.2/2.1) herstellbar und lösbar ist, und dass die Ventilwelle (17.1/17.2) des Rotationskörpers (7.1/7.2) des Rotationsventils (6.1/6.2) der Kupplungshälfte (2.1/2.2) ein zweites Arretierelement (34.1/34.2) aufweist, das zum Herstellen einer das Rotationsventil (6.1/6.2) öffnenden, dabei unverlierbaren, und nur bei geschlossenem Rotationsventil (6.1/6.2) lösbaren Arretierverbindung (13.1/13.2) mit dem einen ersten Arretierelement (27.2/27.1) der entsprechenden Kupplungshälfte (2.2/2.1) eingerichtet ist.

7. Kupplungshälfte (2.1/2.2) nach Anspruch 6, **dadurch gekennzeichnet, dass** das zweite Arretierelement (34.1/34.2) zum Herstellen einer Formschlussverbindung mit dem ersten Arretierelement (27.2/27.1) der entsprechenden Kupplungshälfte (2.2/2.1) wenigstens eine erste Nut (30.1/30.2) aufweist, die an der den Rotationskörper (7.1/7.2) an dem Kupplungsgehäuse (3.1/3.2) drehbar lagernden Ventilwelle (17.1/17.2), außen an dem Kupplungsgehäuse (3.1/3.2) freiliegend, ausgebildet ist.

8. Kupplungshälfte (2.1/2.2) nach Anspruch 7, **dadurch gekennzeichnet, dass** das zweite Arretierelement (34.1/34.2) wenigstens eine zweite Nut (31.1/31.2) aufweist, die an dem Kupplungsgehäuse (3.1/3.2), nach außen freiliegend, als quer zur Gehäuseachse (35.1/35.2) gerichtete Nut ausgebildet ist und in nur einer Drehposition der Ventilwelle (17.1/17.2) mit der wenigstens einen ersten Nut (30.1/30.2) fluchtet.

9. Fluidkupplung (1), umfassend zwei an ihren Kuppelseiten (5.1/5.2) lösbar verbundene, jeweils ein Kupplungsgehäuse (3.1/3.2) aufweisende, mit einem Rotationsventil (6.1/6.2) ausgestattete, längs einer Kupplungsachse (4) ausgerichtete Kupplungshälften (2.1/2.2) nach einem oder mehreren der Ansprüche 1 bis 8, die derart einander entsprechend gleich ausgebildet sind, dass jedes Rotationsventil (6.1/6.2) einen um eine Ventilachse (9.1/9.2), die quer zur Kupplungsachse (4) gerichtet ist, drehbar an dem Kupplungsgehäuse (3.1/3.2) gelagerten Rotationskörper (7.1/7.2) und einen diesen durchquerenden Fluiddurchgang (8.1/8.2) aufweist, der in Abhängigkeit von steuerbaren Drehpositionen des Rotationskörpers (7.1/7.2) um die Ventilachse (9.1/9.2) das Rotationsventil (6.1/6.2) schließt und öffnet, dass an jeder Kupplungshälfte (2.1/2.2) eine Antriebseinrichtung (10.1/10.2) angeordnet ist, die jeweils einem der Rotationskörper (7.1/7.2) zum Steuern seiner Drehpositionen zugeordnet ist, dass jede Kupplungshälfte (2.1/2.2) mit einem Kupplungsmittel (11.1/11.2) ausgestattet ist, das die Kupplungshälften (2.1/2.2) verbindet, wobei die Verbindung durch um die Kupplungsachse (4) relative Drehverstellung der Kupplungshälften (2.1/2.2) lösbar und herstellbar ist, und dass die Kupplungshälften (2.1/2.2) Sicherungsmittel (12.1/12.2) aufweisen, die die relative Drehverstellung zum Sichern der Verbindung der Kupplungshälften (2.1/2.2) bei wenigstens einem geöffneten Rotationsventil (6.1/6.2) sperren und die das Schlie-ßen der beiden Rotationsventile (6.1/6.2) zum Trennen und entsprechend zum Verbinden der Kupplungshälften (2.1/2.2) sichern wobei die Antriebseinrichtung (10.1/10.2), die jeweils an der einen Kupplungshälfte (2.1/2.2) angeordnet ist, eine Antriebswelle (16.1/16.2) aufweist, die jeweils einer Ventilwelle (17.2/17.1) des Rotationskörpers (7.2/7.1) des Rotationsventils (6.2/6.1) der anderen Kupplungshälfte (2.2/2.1) zugeordnet ist, wobei jeweils eine Arretierverbindung (13.2/13.1) eingerichtet ist, die in dem Zustand der miteinander verbundenen Kupplungshälften (2.1/2.2) die jeweilige Antriebswelle (16.1/16.2) an der einen Kupplungshälfte (2.1/2.2) mit der jeweiligen Ventilwelle (17.1/17.2) an der anderen Kupplungshälfte (2.2/2.1) derart drehfest und lösbar verbindet, dass dadurch die Drehposition dieses Rotationskörpers (7.2/7.1) steuerbar ist und die relative Drehverstellung der Kupplungshälften (2.1/2.2) um die Kupplungsachse (4) mit Ausnahme der Freigabe der relativen Drehverstellung bei geschlossenen Rotationsventilen (6.1/6.2) gesperrt ist.

10. Fluidkupplung nach Anspruch 9, **dadurch gekennzeichnet, dass** jeweils die Antriebseinrichtung (10.1/10.2) an der einen Kupplungshälfte (2.1/2.2) ein an dem Kupplungsgehäuse (3.1/3.2) festes Antriebsverbindungsstück (14.1/14.2) aufweist, das die Antriebswelle (16.1/16.2), die um eine Antriebsachse (15.1/15.2), die quer zur Gehäuseachse (35.1/35.2) der Kupplungshälfte (2.1/2.2) gerichtet ist, drehbar lagert, und dass die Ventilwelle (17.2/17.1) außen an dem Kupplungsgehäuse (3.2/3.1) der anderen Kupplungshälfte (2.2/2.1) zum Antrieb der Drehung des Rotationskörpers (7.2/7.1) des zugehörigen Rotationsventils (6.2/6.1) freiliegt, wobei die Antriebswelle (16.1/16.2) und die Ventilwelle (17.1/17.2), die jeweils Bestandteile desselben Kupplungsgehäuses (3.1/3.2) sind, mit einem Umfangswinkel zueinander versetzt angeordnet sind, wobei jeweils das die Antriebswelle (16.1/16.2) lagernde Antriebsverbindungsstück (14.1/14.2), das an dem einen Kupplungsgehäuse (3.1/3.2) fest ist, das andere Kupplungsgehäuse (3.2/3.1) außen soweit überragt, dass dort in dem Zustand der lösbaren Verbindung der beiden Kupplungshälften (2.1/2.2) die Arretierverbindung (13.2/13.1) eingerichtet ist.

11. Fluidkupplung nach Anspruch 10, **dadurch gekennzeichnet, dass** jeweils das Antriebsverbindungsstück (14.1/14.2) der Antriebseinrichtung (10.1/10.2) der einen Kupplungshälfte (2.1/2.2) als eine einen Bestandteil des zugehörigen Kupplungsmittels (11.1/11.2) bildende Kupplungsklaue (18.1/18.2) mit einem Greifrand (19.1/19.2) ausgebildet ist, der zur lösbaren, die Kuppelseiten (5.1/5.2) aneinander spannenden Verbindung der Kupplungshälften (2.1/2.2) einen zugeordneten Radialvorsprung (20.2/20.1) am Kupplungsgehäuse (3.2/3.1) der anderen Kupplungshälfte (2.2/2.1) lösbar hinterfasst, wobei der Greifrand (19.1/19.2) und der Radialvorsprung (20.1/20.2) ein Klauenverbindungspaar bilden und durch die relative Drehverstellung der beiden Kupplungshälften (2.1/2.2) um die Kupplungsachse (4) in Eingriff und entsprechend außer Eingriff setzbar sind.

12. Fluidkupplung nach Anspruch 11, **dadurch**
**gekennzeichnet, dass** zum Zentrieren der Verbindung der Kupplungshälften (2.1/2.2) jedes der beiden Klauenverbindungspaare konisch zentriert ist, wobei der Greifrand (19.1/19.2) und der zugehörige Radialvorsprung (20.1/20.2) quer zur Kupplungsachse (4) schräg nach außen und, von der Kuppelseite (5.1/5.2) wegweisend, nach hinten gerichtet sind, wobei sie passförmig ineinanderfassen.

13. Fluidkupplung nach einem der Ansprüche 10 bis 12, **dadurch gekenn zeichnet,** dass jeweils das Antriebsverbindungsstück (14.1/14.2) der einen Kupplungshälfte (2.1/2.2) durch ein Flächensegment gebildet ist, das sich über ein Viertel eines zylindrischen Umfangs der Fluidkupplung (1) erstreckt und dem zum Herstellen der Verbindung der Kupplungshälften (2.1/2.2) an der jeweils anderen Kupplungshälfte (2.2/2.1) ein entsprechender freier Umfangsbereich (26.1/26.2) außen am Kupplungsgehäuse (3.2/3.1) zugeordnet ist.

14. Fluidkupplung nach Anspruch 13, **dadurch gekennzeichnet, dass** jeweils das Flächensegment der einen Kupplungshälfte (2.1/2.2) zu einer Kreiszylinderaußenfläche des Kupplungsgehäuses (3.2/3.1) der anderen Kupplungshälfte (2.2/2.1) konzentrisch ist.

15. Fluidkupplung nach einem der Ansprüche 9 bis 14, **dadurch gekennzeichnet, dass** jeweils die Arretierverbindung (13.1/13.2) durch eine Formschlussverbindung mit an der Antriebseinrichtung (10.2/10.1) und dem zum Antrieb zugehörigen Rotationskörper (7.1/7.2) angeordneten, Arretierelemente (27.1/27.2; 34.1/34.2) bildenden Verbindungspartnern gebildet ist.

16. Fluidkupplung nach Anspruch 15, **dadurch gekennzeichnet, dass** die Verbindungspartner der Formschlussverbindung durch wenigstens ein Federelement (29.1/29.2) sowie, diesem zugeordnet, wenigstens eine erste Nut (30.2/30.1), die mit dem zur Arretierverbindung (13.2/13.1) zugehörigen Rotationskörper (7.2/7.1) drehfest verbunden ist, gebildet sind, wobei das wenigstens eine Federelement (29.1/29.2) im Zustand der verbundenen und gegen ihre relative Drehverstellung gesperrten Kupplungshälften (2.1/2.2) in der wenigstens einen ersten Nut (30.2/30.1) gefangen gehalten ist.

17. Fluidkupplung nach Anspruch 16, **dadurch gekennzeichnet, dass** die Verbindungspartner der Formschlussverbindung wenigstens eine zweite Nut (31.2/31.1) aufweisen, die mit der wenigstens einen ersten Nut (30.2/30.1) nur in einer zur Schließstellung des zugehörigen Rotationsventils (6.2/6.1) gehörenden Drehposition der wenigstens einen erste Nut (30.2/30.1) fluchtet, wobei das wenigstens eine Federelement (29.1/29.2) zum Verlassen und Herstellen der gefangenen Halteverbindung und damit zur Freigabe der relativen Drehverstellung der Kupplungshälften (2.1/2.2) durch die wenigstens eine fluchtende zweite Nut (31.2/31.1) hindurchführbar ist.

18. Fluidkupplung nach einem der Ansprüche 9 bis 17, **dadurch gekennzeichnet, dass** jeweils die Arretierverbindung (13.1/13.2) mit einem Stoppanschlag (33.1/33.2) ausgebildet ist, der die relative Drehverstellung der Kupplungshälften (2.1/2.2) um die Kupplungsachse (4) definiert begrenzt.

19. Fluidkupplung nach einem der Ansprüche 9 bis 18, **dadurch gekennzeichnet, dass** jeweils der Fluiddurchgang (8.1/8.2) des Rotationskörpers (7.1/7.2) des zugehörigen Rotationsventils (6.1/6.2) und die zugehörige Arretierverbindung (13.1/13.2) derart aneinander angepasst sind, dass wenigstens bis zu einem Schaltwinkel von 10° das Rotationsventil (6.1/6.2) geschlossen ist, wobei der Schaltwinkel der Winkel ist, um den der Rotationskörper (7.1/7.2) um seine Ventilachse (9.1/9.2) aus der Drehposition im Zustand der freien relativen Drehverstellung der Kupplungshälften (2.1/2.2) zum Öffnen des Rotationsventils (6.1/6.2) drehbar ist.

20. Fluidkupplung nach einem der Ansprüche 9 bis 19, **dadurch gekennzeichnet, dass** die Rotationsventile (6.1/6.2) der beiden Kupplungshälften (2.1/2.2) Kükenventile sind.

## Claims

1. Coupling half (2.1/2.2) of a fluid coupling (1), wherein the coupling half (2.1/2.2), which has a coupling housing (3.1/3.2) with coupling side (5.1/5.2) and housing axis (35.1/35.2), is an independent coupling part for making a fluid coupling (1) with a similar coupling part formed by the corresponding coupling half (2.1/2.2) and wherein the coupling half (2.1/2.2) has a rotary valve (6.1/6.2) with a rotary body (7.1/7.2) rotatably supported on the coupling housing (3.1/3.2), a fluid passage (8.1/8.2) passing through the rotary body and the rotational position of which is controllable for opening and closing of the fluid passage (8.1/8.2) and thus of the rotary valve (6.1/6.2), **characterized in that** a switchable drive device (10.1/10.2) is arranged and configured on the coupling half (2.1/2.2) which drive device has a drive shaft (16.1/16.2) for controlling drive connection and securing connection to a valve shaft (17.1/17.2) of a rotary body (7.2/7.1) of a rotary valve (6.2/6.1) of a correspondingly similar couplable coupling half (2.2/2.1), and **in that** the rotary valve (6.1/6.2) belonging to the coupling half (2.1/2.2) has a valve shaft (17.1/17.2) exposed on the outside of the coupling housing (3.1/3.2) for drive connection and securing connection to a corresponding controlling drive device (10.2/10.1) of the correspondingly similar coupling half (2.2/2.1).

2. Coupling half (2.1/2.2) according to claim 1, **characterized in that** the drive device (10.1/10.2) has a drive connection piece (14.1/14.2) fixed to the coupling housing (3.1/3.2), which drive connection piece protrudes in front of the coupling side (5.1/5.2) parallel to the housing axis (35.1/35.2) and supports the drive shaft (16.1/16.2).

3. Coupling half (2.1/2.2) according to claim 2, **characterized in that** the drive shaft (16.1/16.2) and the valve shaft (17.1/17.2) are arranged on the circumference of the coupling half (2.1/2.2) offset by 180°.

4. Coupling half (2.1/2.2) according to any one of claims 1 to 3, **characterized in that** a coupling dog (18.1/18.2) of the coupling half (2.1/2.2) is a component of the drive device (10.1/10.2), wherein the coupling dog (18.1/18.2) is configured to establish a coupling connection together with the corresponding coupling dog (18.2/18.1) of the correspondingly similar coupling half (2.2/2.1).

5. Coupling half (2.1/2.2) according to claim 4, **characterized in that** a housing base (22.1/22.2), which accommodates the valve shaft (17.1/17.2) of the rotary body (7.1/7.2), is formed outside on the coupling housing (3.1/3.2) and has a base edge (23.1/23.2) which is formed for engaging with a gripping edge (19.2/19.2) of the coupling dog (18.2/18.1) of the correspondingly similar coupling half (2.2/2.1).

6. Coupling half (2.1/2.2) according to any one of claims 1 to 5, **characterized in that** the drive shaft (16.1/16.2) of the controlling drive device (10.1/10.2) has a first locking element (27.1/27.2) which can be non-rotatably connected to the valve shaft (17.2/17.1) of the rotary body (7.2/7.1) of the rotary valve (6.2/6.1) of the corresponding coupling half (2.1/2.2) for rotational movement, it being possible to place the locking element in a defined rotational position closing the rotary valve (6.2/6.1), only in which a locking connection (13.2/13.1) to the valve shaft (17.2/17.1) of the corresponding coupling half (2.2/2.1) can be established and released, and **in that** the valve shaft (17.1/17.2) of the rotary body (7.1/7.2) of the rotary valve (6.1/6.2) of the coupling half (2.1/2.2) has a second locking element (34.1/34.2) which is configured with the one first locking element (27.2/27.1) of the corresponding coupling half (2.2/2.1) to produce a locking connection (13.1/13.2), which opens the rotary valve (6.1/6.2), is at the same time captive, and can only be released when the rotary valve (6.1/6.2) is closed.

7. Coupling half (2.1/2.2) according to claim 6, **characterized in that** the second locking element (34.1/34.2) has at least one first groove (30.1/30.2) for establishing a positive-fit connection to the first locking element (27.2/27.1) of the corresponding coupling half (2.2/2.1), which groove is formed on the valve shaft (17.1/17.2) rotatably supporting the rotary body (7.1/7.2) on the coupling housing (3.1/3.2), and is exposed on the outside of the coupling housing (3.1/3.2).

8. Coupling half (2.1/2.2) according to claim 7, **characterized in that** the second locking element (34.1/34.2) has at least one second groove (31.1/31.2) which is configured on the coupling housing (3.1/3.2), exposed on the outside, as a groove directed transversely to the housing axis (35.1/35.2) and is only aligned with the at least one first groove (30.1/30.2) in a rotational position of the valve shaft (17.1/17.2).

9. Fluid coupling (1) comprising two coupling halves (2.1/2.2) according to one or more of claims 1 to 8 which are releasably connected on their coupling sides (5.1/5.2), each coupling half having a coupling housing (3.1/3.2), being equipped with a rotary valve (6.1/6.2), being aligned along a coupling axis (4), and being formed correspondingly similar to each other in such a manner that each rotary valve (6.1/6.2) has a rotary body (7.1/7.2) mounted on the coupling housing (3.1/3.2) so as to be rotatable about a valve axis (9.1/9.2), which is directed transversely to the coupling axis (4), and a fluid passage (8.1/8.2) which traverses this rotary body, said fluid passage closing and opening the rotary valve (6.1/6.2) depending on controllable rotational positions of the rotary body (7.1/7.2) about the valve axis (9.1/9.2), that a drive device (10.1/10.2), which is associated in each case with one of the rotary bodies (7.1/7.2) for controlling its rotational position, is arranged on each coupling half (2.1/2.2), that each coupling half (2.1/2.2) is equipped with a coupling means (11.1/11.2) which connects the coupling halves (2.1/2.2), it being possible for the connection to be released and established by relative rotational movement of the coupling halves (2.1/2.2) about the coupling axis (4), and that the coupling halves (2.1/2.2) have securing means (12.1/12.2) which block the relative rotational movement for securing the connection of the coupling halves (2.1/2.2) when at least one rotary valve (6.1/6.2) is open and which secure the closure of the two rotary valves (6.1/6.2) for disconnecting and correspondingly for connecting the coupling halves (2.1/2.2), wherein the drive device (10.1/10.2), which is arranged in each case on the one coupling half (2.1/2.2), has a drive shaft (16.1/16.2) which is associated in each case with a valve shaft (17.2/17.1) of the rotary body (7.2/7.1) of the rotary valve (6.2/6.1) of the other coupling half (2.2/2.1), whereby in each case, a locking connection (13.2/13.1) is configured which, when the coupling halves (2.1/2.2) are connected to each other, connects the respective drive shaft (16.1/16.2) on the one coupling half (2.1/2.2) to the respective valve shaft (17.1/17.2) on the other coupling half (2.2/2.1) in a non-rotatable and releasable manner such that the rotational position of this rotary body (7.2/7.1) is controllable thereby and the relative rotational movement of the coupling halves (2.1/2.2) about the coupling axis (4) is blocked except that relative rotational movement when the rotary valves (6.1/6.2) are closed is permitted.

10. Fluid coupling according to claim 9, **characterized in that** in each case the drive device (10.1/10.2) on the one coupling half (2.1/2.2) has a drive connection piece (14.1/14.2) fixed to the coupling housing (3.1/3.2), which drive connection piece rotatably supports the drive shaft (16.1/16.2) about a drive axis (15.1/15.2) that is directed transversely to the housing axis (35.1/35.2) of the coupling half (2.1/2.2), and **in that** the valve shaft (17.2/17.1) is exposed outside on the coupling housing (3.2/3.1) of the other coupling half (2.2/2.1) for driving the rotation of the rotary body (7.2/7.1) of the associated rotary valve (6.2/6.1), wherein the drive shaft (16.1/16.2) and the valve shaft (17.1/17.2), which are each components of the same coupling housing (3.1/3.2), are arranged offset at a peripheral angle to each other, wherein in each case the drive connection piece (14.1/14.2) supporting the drive shaft (16.1/16.2), which drive connection piece is fixed to the one coupling housing (3.1/3.2), protrudes so far beyond the other coupling housing (3.2/3.1) on the outside that the locking connection (13.2/13.1) is configured there when the two coupling halves (2.1/2.2) are releasably connected.

11. Fluid coupling according to claim 10, **characterized in that** in each case the drive connection piece (14.1/14.2) of the drive device (10.1/10.2) of the one coupling half (2.1/2.2) is configured as a coupling dog (18.1/18.2) forming a component of the associated coupling means (11.1/11.2), with a gripping edge (19.1/19.2) which releasably engages behind an associated radial projection (20.2/20.1) on the coupling housing (3.2/3.1) of the other coupling half (2.2/2.1) to releasably connect the coupling halves (2.1/2.2) while clamping the coupling sides (5.1/5.2) to one another, wherein the gripping edge (19.1/19.2) and the radial projection (20.1/20.2) form a dog connection pair and can be engaged and correspondingly disengaged by the relative rotational movement of the two coupling halves (2.1/2.2) about the coupling axis (4).

12. Fluid coupling according to claim 11, **characterized in that** for centring the connection of the coupling halves (2.1/2.2) each of the two dog connection pairs is centred conically, wherein the gripping edge (19.1/19.2) and the associated radial projection (20.1/20.2) are directed obliquely outwards transversely to the coupling axis (4) and, pointing away from the coupling side (5.1/5.2), backwards, wherein they fit snugly into each other.

13. Fluid coupling according to any one of claims 10 to 12, **characterized in that** in each case the drive connection piece (14.1/14.2) of the one coupling half (2.1/2.2) is formed by a surface segment which extends over a quarter of a cylindrical circumference of the fluid coupling (1) and which is associated with a corresponding free peripheral region (26.1/26.2) on the outside of the coupling housing (3.2/3.1) to establish the connection of the coupling halves (2.1/2.2) to the respective other coupling half (2.2/2.1).

14. Fluid coupling according to claim 13, **characterized in that** in each case the surface segment of the one coupling half (2.1/2.2) is concentric with a circular cylinder outer surface of the coupling housing (3.2/3.1) of the other coupling half (2.2/2.1).

15. Fluid coupling according to any one of claims 9 to 14, **characterized in that** in each case the locking connection (13.1/13.2) is formed by a positive-fit connection to connection partners forming locking elements (27.1/27.2; 34.1/34.2) which are arranged on the drive device (10.2/10.1) and the rotary body (7.1/7.2) associated with the drive.

16. Fluid coupling according to claim 15, **characterized in that** the connection partners of the positive-fit connection are formed by at least one spring element (29.1/29.2) as well as, associated therewith, at least one first groove (30.2/30.1) which is non-rotatably connected to the rotary body (7.2/7.1) associated with the locking connection (13.2/13.1), wherein the at least one spring element (29.1/29.2) is held captive in the at least one first groove (30.2/30.1) when the coupling halves (2.1/2.2) are connected and locked against their relative rotational movement.

17. Fluid coupling according to claim 16, **characterized in that** the connection partners of the positive-fit connection have at least one second groove (31.2/31.1) which is aligned with the at least one first groove (30.2/30.1) only in a rotational position of the at least one first groove (30.2/30.1) which pertains to the closed position of the associated rotary valve (6.2/6.1), wherein the at least one spring element (29.1/29.2) can be guided through the at least one aligned second groove (31.2/31.1) to leave and to establish the captive holding connection and thus to enable the relative rotational movement of the coupling halves (2.1/2.2).

18. Fluid coupling according to any one of claims 9 to 17, **characterized in that** the locking connection (13.1/13.2) in each case is formed with a stop abutment (33.1/33.2) which limits the relative rotational movement of the coupling halves (2.1/2.2) about the coupling axis (4) in a defined manner.

19. Fluid coupling according to any one of claims 9 to 18, **characterized in that** in each case the fluid passage (8.1/8.2) of the rotary body (7.1/7.2) of the associated rotary valve (6.1/6.2) and the associated locking connection (13.1/13.2) are adapted to one another in such a way that the rotary valve (6.1/6.2) is closed at least up to a switching angle of 10°, wherein the switching angle is the angle by which the rotary body (7.1/7.2) can be rotated about its valve axis (9.1/9.2) from the rotational position, when there is free relative rotational movement of the coupling halves (2.1/2.2), to open the rotary valve (6.1/6.2).

20. Fluid coupling according to any one of claims 9 to 19, **characterized in that** the rotary valves (6.1/6.2) of the two coupling halves (2.1/2.2) are plug valves.

## Revendications

1. Moitié d'accouplement (2.1/2.2) d'un accouplement hydraulique (1), la moitié d'accouplement (2.1/2.2), qui présente un boîtier d'accouplement (3.1/3.2) avec un côté d'accouplement (5.1/5.2) et un axe de boîtier (35.1/35.2), étant une partie d'accouplement indépendante pour l'établissement d'un accouplement hydraulique (1) avec une partie d'accouplement identique formée par la moitié d'accouplement correspondante (2.1/2.2), et la moitié d'accouplement (2.1/2.2) présentant une soupape de rotation (6.1/6.2) avec un corps de rotation (7.1/7.2) monté de manière rotative sur le boîtier d'accouplement (3.1/3.2), qu'un passage de fluide (8.1/8.2) traverse et dont la position rotative peut être commandée pour l'ouverture et la fermeture du passage de fluide (8.1/8.2) et ainsi de la soupape de rotation (6.1/6.2), **caractérisée en ce qu'**un dispositif d'entraînement commutable (10.1/10.2) est agencé et adapté sur la moitié d'accouplement (2.1/2.2), lequel présente un arbre d'entraînement (16.1/16.2) pour la liaison d'entraînement de commande et la liaison de sécurisation à un arbre de soupape (17.1/17.2) d'un corps de rotation (7.2/7.1) d'une soupape de rotation (6.2/6.1) d'une moitié d'accouplement accouplable identique correspondante (2.2/2.1), et **en ce que** la soupape de rotation (6.1/6.2) propre à la moitié d'accouplement (2.1/2.2) présente un arbre de soupape (17.1/17.2) dégagé à l'extérieur du boîtier d'accouplement (3.1/3.2) pour la liaison d'entraînement et la liaison de sécurisation à un dispositif d'entraînement de commande correspondant (10.2/10.1) de la moitié d'accouplement identique correspondante (2.2/2.1).

2. Moitié d'accouplement (2.1/2.2) selon la revendication 1, **caractérisée en ce que** le dispositif d'entraînement (10.1/10.2) présente une pièce de liaison d'entraînement (14.1/14.2) fixée au boîtier d'accouplement (3.1/3.2), qui fait saillie parallèlement à l'axe de boîtier (35.1/35.2) devant le côté d'accouplement (5.1/5.2) et qui supporte l'arbre d'entraînement (16.1/16.2).

3. Moitié d'accouplement (2.1/2.2) selon la revendication 1 ou 2, **caractérisée en ce que** l'arbre d'entraînement (16.1/16.2) et l'arbre de soupape (17.1/17.2) sont agencés à la périphérie de la moitié d'accouplement (2.1/2.2) avec un décalage de 180°.

4. Moitié d'accouplement (2.1/2.2) selon l'une quelconque des revendications 1 à 3, **caractérisée en ce qu'**une griffe d'accouplement (18.1/18.2) de la moitié d'accouplement (2.1/2.2) fait partie intégrante du dispositif d'entraînement (10.1/10.2), la griffe d'accouplement (18.1/18.2) étant adaptée pour établir une liaison d'accouplement conjointement avec la griffe d'accouplement correspondante (18.2/18.1) de la moitié d'accouplement identique correspondante (2.2/2.1).

5. Moitié d'accouplement (2.1/2.2) selon la revendication 4, **caractérisée en ce qu'**un socle de boîtier (22.1/22.2) est configuré à l'extérieur du boîtier d'accouplement (3.1/3.2), lequel reçoit l'arbre de soupape (17.1/17.2) du corps de rotation (7.1/7.2) et lequel présente un bord de socle (23.1/23.2) qui est configuré pour s'engager avec un bord de préhension (19.2/19.2) de la griffe d'accouplement (18.2/18.1) de la moitié d'accouplement identique correspondante (2.2/2.1).

6. Moitié d'accouplement (2.1/2.2) selon l'une quelconque des revendications 1 à 5, **caractérisée en ce que** l'arbre d'entraînement (16.1/16.2) du dispositif d'entraînement de commande (10.1/10.2) présente un premier élément d'arrêt (27.1/27.2) pouvant être relié de manière solidaire en rotation à l'arbre de soupape (17.2/17.1) du corps de rotation (7.2/7.1) de la soupape de rotation (6.2/6.1) de la moitié d'accouplement correspondante (2.1/2.2) pour le réglage rotatif, qui peut être placé dans une position rotative définie fermant la soupape de rotation (6.2/6.1), dans laquelle seulement une liaison d'arrêt (13.2/13.1) avec l'arbre de soupape (17.2/17.1) de la moitié d'accouplement correspondante (2.2/2.1) peut être établie et détachée, et **en ce que** l'arbre de soupape (17.1/17.2) du corps de rotation (7.1/7.2) de la soupape de rotation (6.1/6.2) de la moitié d'accouplement (2.1/2.2) présente un deuxième élément d'arrêt (34.1/34.2) qui est adapté pour établir une liaison d'arrêt (13.1/13.2) ouvrant la soupape de rotation (6.1/6.2), imperdable et ne pouvant être détachée que lorsque la soupape de rotation (6.1/6.2) est fermée, avec le premier élément d'arrêt (27.2/27.1) de la moitié d'accouplement correspondante (2.2/2.1).

7. Moitié d'accouplement (2.1/2.2) selon la revendication 6, **caractérisée en ce que** le deuxième élément d'arrêt (34.1/34.2) présente au moins une première rainure (30.1/30.2) pour établir une liaison par complémentarité de forme avec le premier élément d'arrêt (27.2/27.1) de la moitié d'accouplement correspondante (2.2/2.1), laquelle rainure est configurée sur l'arbre de soupape (17.1/17.2) supportant le corps de rotation (7.1/7.2) de manière rotative sur le boîtier d'accouplement (3.1/3.2), dégagée à l'extérieur du boîtier d'accouplement (3.1/3.2).

8. Moitié d'accouplement (2.1/2.2) selon la revendication 7, **caractérisée en ce que** le deuxième élément d'arrêt (34.1/34.2) présente au moins une deuxième rainure (31.1/31.2) qui est configurée sur le boîtier d'accouplement (3.1/3.2), dégagée vers l'extérieur, sous forme de rainure orientée transversalement à l'axe de boîtier (35.1/35.2) et qui, dans seulement une position rotative de l'arbre de soupape (17.1/17.2), est alignée avec l'au moins une première rainure (30.1/30.2).

9. Accouplement hydraulique (1), comprenant deux moitiés d'accouplement (2.1/2.2) reliées de manière détachable au niveau de leurs côtés d'accouplement (5.1/5.2), présentant chacune un boîtier d'accouplement (3.1/3.2), équipées d'une soupape de rotation (6.1/6.2), orientées le long d'un axe d'accouplement (4), selon une ou plusieurs des revendications 1 à 8, qui sont configurées de manière identique l'une à l'autre en correspondance de telle sorte que chaque soupape de rotation (6.1/6.2) présente un corps de rotation (7.1/7.2) monté sur le boîtier d'accouplement (3.1/3.2) de manière rotative autour d'un axe de soupape (9.1/9.2) qui est orienté transversalement à l'axe d'accouplement (4), et un passage de fluide (8.1/8.2) qui le traverse, qui ferme et ouvre la soupape de rotation (6.1/6.2) en fonction de positions rotatives commandables du corps de rotation (7.1/7.2) autour de l'axe de soupape (9.1/9.2), en ce qu'un dispositif d'entraînement (10.1/10.2) est agencé sur chaque moitié d'accouplement (2.1/2.2), lequel est respectivement attribué à l'un des corps de rotations (7.1/7.2) pour commander ses positions rotatives, en ce que chaque moitié d'accouplement (2.1/2.2) est équipée d'un moyen d'accouplement (11.1/11.2) qui relie les moitiés d'accouplement (2.1/2.2), la liaison pouvant être détachée et établie par un réglage rotatif relatif des moitiés d'accouplement (2.1/2.2) autour de l'axe d'accouplement (4), et en ce que les moitiés d'accouplement (2.1/2.2) présentent des moyens de sécurisation (12.1/12.2) qui bloquent le réglage rotatif relatif pour sécuriser la liaison des moitiés d'accouplement (2.1/2.2) lorsqu'au moins une soupape de rotation (6.1/6.2) est ouverte et qui sécurisent la fermeture des deux soupapes de rotation (6.1/6.2) pour séparer et, de manière correspondante, pour relier les moitiés d'accouplement (2.1/2.2), le dispositif d'entraînement (10.1/10.2), qui est agencé respectivement sur l'une des moitiés d'accouplement (2.1/2.2), présentant un arbre d'entraînement (16.1/16.2) qui est respectivement attribué à un arbre de soupape (17.2/17.1) du corps de rotation (7.2/7.1) de la soupape de rotation (6.2/6.1) de l'autre moitié d'accouplement (2.2/2.1), une liaison d'arrêt (13.2/13.1) étant respectivement adaptée, laquelle, dans l'état des moitiés d'accouplement (2.1/2.2) reliées entre elles, relie l'arbre d'entraînement respectif (16.1/16.2) sur l'une des moitiés d'accouplement (2.1/2.2) à l'arbre de soupape respectif (17.1/17.2) sur l'autre moitié d'accouplement (2.2/2.1) de manière solidaire en rotation et détachable, de telle sorte que la position rotative de ce corps de rotation (7.2/7.1) peut ainsi être commandée et le réglage rotatif relatif des moitiés d'accouplement (2.1/2.2) autour de l'axe d'accouplement (4) est bloqué, à l'exception de la libération du réglage rotatif relatif lorsque les soupapes de rotation (6.1/6.2) sont fermées.

10. Accouplement hydraulique selon la revendication 9, **caractérisé en ce que** le dispositif d'entraînement (10.1/10.2) présente respectivement, sur l'une des moitiés d'accouplement (2.1/2.2), une pièce de liaison d'entraînement (14.1/14.2) fixée au boîtier d'accouplement (3.1/3.2), qui supporte l'arbre d'entraînement (16.1/16.2) de manière rotative autour d'un axe d'entraînement (15.1/15.2) qui est orienté transversalement à l'axe de boîtier (35.1/35.2) de la moitié d'accouplement (2.1/2.2), et **en ce que** l'arbre de soupape (17.2/17.1) est dégagé à l'extérieur du boîtier d'accouplement (3.2/3.1) de l'autre moitié d'accouplement (2.2/2.1) pour entraîner la rotation du corps de rotation (7.2/7.1) de la soupape de rotation associée (6.2/6.1), l'arbre d'entraînement (16.1/16.2) et l'arbre de soupape (17.1/17.2), qui font chacun partie intégrante du même boîtier d'accouplement (3.1/3.2), étant agencés en décalage l'un par rapport à l'autre d'un angle périphérique, la pièce de liaison d'entraînement (14.1/14.2) supportant l'arbre d'entraînement (16.1/16.2), qui est fixée sur l'un des boîtiers d'accouplement (3.1/3.2), dépassant respectivement extérieurement de l'autre boîtier d'accouplement (3.2/3.1) dans une mesure telle que la liaison d'arrêt (13.2/13.1) y est adaptée dans l'état de liaison détachable des deux moitiés d'accouplement (2.1/2.2).

11. Accouplement hydraulique selon la revendication 10, **caractérisé en ce que** la pièce de liaison d'entraînement (14.1/14.2) du dispositif d'entraînement (10.1/10.2) de l'une des moitiés d'accouplement (2.1/2.2) est respectivement configurée sous la forme d'une griffe d'accouplement (18.1/18.2) formant un constituant du moyen d'accouplement associé (11.1/11.2) avec un bord de préhension (19.1/19.2) qui, pour la liaison détachable des moitiés d'accouplement (2.1/2.2) serrant les côtés d'accouplement (5.1/5.2) l'un contre l'autre, s'engage de manière détachable derrière une protubérance radiale attribuée (20.2/20.1) sur le boîtier d'accouplement (3.2/3.1) de l'autre moitié d'accouplement (2.2/2.1), le bord de préhension (19.1/19.2) et la protubérance radiale (20.1/20.2) formant une paire de liaison à griffes et pouvant être engagés et désengagés de manière correspondante par le réglage rotatif relatif des deux moitiés d'accouplement (2.1/2.2) autour de l'axe d'accouplement (4).

12. Accouplement hydraulique selon la revendication 11, **caractérisé en ce que**, pour centrer la liaison des moitiés d'accouplement (2.1/2.2), chacune des deux paires de liaison à griffes est centrée de manière conique, le bord de préhension (19.1/19.2) et la protubérance radiale associée (20.1/20.2) étant orientés transversalement à l'axe d'accouplement (4), en oblique vers l'extérieur et vers l'arrière, à l'opposé du côté d'accouplement (5.1/5.2), en s'emboîtant l'un dans l'autre de manière ajustée.

13. Accouplement hydraulique selon l'une quelconque des revendications 10 à 12, **caractérisé en ce que** la pièce de liaison d'entraînement (14.1/14.2) de l'une des moitiés d'accouplement (2.1/2.2) est formée par un segment de surface qui s'étend sur un quart d'une périphérie cylindrique de l'accouplement hydraulique (1) et auquel est attribuée une zone périphérique libre correspondante (26.1/26.2) à l'extérieur du boîtier d'accouplement (3.2/3.1) pour établir la liaison des moitiés d'accouplement (2.1/2.2) sur l'autre moitié d'accouplement respective (2.2/2.1).

14. Accouplement hydraulique selon la revendication 13, **caractérisé en ce que** chaque segment de surface d'une moitié d'accouplement (2.1/2.2) est concentrique à une surface extérieure cylindrique circulaire du boîtier d'accouplement (3.2/3.1) de l'autre moitié d'accouplement (2.2/2.1).

15. Accouplement hydraulique selon l'une quelconque des revendications 9 à 14, **caractérisé en ce que** la liaison d'arrêt (13.1/13.2) est formée par une liaison par complémentarité de forme avec des partenaires de liaison formant des éléments d'arrêt (27.1/27.2 ; 34.1/34.2), agencés sur le dispositif d'entraînement (10.2/10.1) et le corps de rotation (7.1/7.2) associé à l'entraînement.

16. Accouplement hydraulique selon la revendication 15, **caractérisé en ce que** les partenaires de liaison de la liaison par complémentarité de forme sont formés par au moins un élément de ressort (29.1/29.2) ainsi que, attribuée à celui-ci, au moins une première rainure (30.2/30.1) qui est reliée de manière solidaire en rotation au corps de rotation (7.2/7.1) associé à la liaison d'arrêt (13.2/13.1), l'au moins un élément de ressort (29.1/29.2) étant maintenu captif dans l'au moins une première rainure (30.2/30.1) dans l'état des moitiés d'accouplement (2.1/2.2) reliées et bloquées contre leur réglage rotatif relatif.

17. Accouplement hydraulique selon la revendication 16, **caractérisé en ce que** les partenaires de liaison de la liaison par complémentarité de forme présentent au moins une deuxième rainure (31.2/31.1) qui n'est alignée avec l'au moins une première rainure (30.2/30.1) que dans une position rotative de l'au moins une première rainure (30.2/30.1) associée à la position de fermeture de la soupape de rotation correspondante (6.2/6.1), l'au moins un élément de ressort (29.1/29.2) pouvant être guidé à travers l'au moins une deuxième rainure alignée (31.2/31.1) pour quitter et établir la liaison de retenue captive et ainsi libérer le réglage rotatif relatif des moitiés d'accouplement (2.1/2.2).

18. Accouplement hydraulique selon l'une quelconque des revendications 9 à 17, **caractérisé en ce que** chaque liaison d'arrêt (13.1/13.2) est configurée avec une butée d'arrêt (33.1/33.2) qui limite de manière définie le réglage rotatif relatif des moitiés d'accouplement (2.1/2.2) autour de l'axe d'accouplement (4).

19. Accouplement hydraulique selon l'une quelconque des revendications 9 à 18, **caractérisé en ce que** le passage de fluide (8.1/8.2) du corps de rotation (7.1/7.2) de la soupape de rotation associée (6.1/6.2) et la liaison d'arrêt associée (13.1/13.2) sont ajustés l'un à l'autre de telle sorte qu'au moins jusqu'à un angle de commutation de 10°, la soupape de rotation (6.1/6.2) est fermée, l'angle de commutation étant l'angle dont le corps de rotation (7.1/7.2) peut tourner autour de son axe de soupape (9.1/9.2) à partir de la position rotative dans l'état du réglage rotatif relatif libre des moitiés d'accouplement (2.1/2.2) pour ouvrir la soupape de rotation (6.1/6.2).

20. Accouplement hydraulique selon l'une quelconque des revendications 9 à 19, **caractérisé en ce que** les soupapes de rotation (6.1/6.2) des deux moitiés d'accouplement (2.1/2.2) sont des soupapes à boisseau.
